# EUROPEAN PATENT SPECIFICATION

(11) **EP 1 826 252 B1**
(45) Date of publication and mention of the grant of the patent: **20.01.2010**
(21) Application number: 07003744.5
(22) Date of filing: 23.02.2007
(51) Int. Cl.: C09D 11/10

(54) **Ink composition, and image forming method and recorded material using the same**
Tintenzusammensetzung, Bilderzeugungsverfahren und aufgezeichnetes Material damit
Composition d'encre, procédé de formation d'images et matériau enregistré les utilisant

(30) Priority: 28.02.2006 JP 2006053824
(43) Date of publication of application: 29.08.2007
(73) Proprietor: FUJIFILM Corporation, Minato-ku Tokyo (JP)
(72) Inventor: Sano, Shojiro, Haibara-gun, Shizuoka-ken (JP); Sato, Takehiko, Haibara-gun, Shizuoka-ken (JP)
(74) Representative: HOFFMANN EITLE

(56) References cited:
- EP-A- 1 491 600
- EP-A- 1 500 688
- EP-A- 1 528 088
- EP-A- 1 614 730
- US-A1- 2004 052 968
- US-A1- 2005 113 483

## Description

### BACKGROUND OF THE INVENTION

### Technical Field

The invention relates to an ink composition, and an image forming method and a recorded material using the same, and more specifically to an ink composition that is polymerizable and curable after recording, and an image forming method and a recorded material using the same.

### Description of the Related Art

As an ink having resistance to fading, an ultraviolet (UV) ink, which is cured by irradiation with UV and has UV shielding property, is known (see, for example, Japanese Patent Application Laid-Open (JP-A) No. 2003-221528). For curing when using such an ink, a system utilizing radical polymerization of monomer components is widely employed (see, for example, JP-A Nos. 2003-246818 , 2003-292855 , 9-183927 , 2004-91556 , 2004-43634 , and 2005-113043).

The above ink composition is cured, after recording by irradiation with active energy rays, to polymerize the monomer, and is preferably curable by irradiation with active energy rays of low energy. That is, the ink composition preferably has high sensitivity to active energy rays. By increasing the sensitivity, a light emitting diode of relatively low energy can be utilized efficiently, instead of a UV lamp, as a light source for the active energy rays.

As an example of such an ink composition, an active ray curable ink composition containing an oxethane compound in an amount of 30 to 95%, an oxirane compound in an amount of 5 to 70%, and a vinyl ether compound in an amount of 0 to 40%, and further containing a sensitizer (a polycyclic aromatic compound such as anthracene, a carbazole derivative, or a thioxanthone derivative) has been disclosed (see, for example, JP-A No. 2005-113043 ). However, the ink composition has a problem in that an image after printing cracks due to external stress, and also has problems in that the ink thickens and the ink storage stability is insufficient.

EP-A-1 491 600, US 2004/0052968, EP-A-1 614 730, EP-A-1 528 088, EP-A-1 500 688 and US 2005/0113483 all disclose ink compositions comprising mixtures of epoxy compounds and oxetane compounds. Of these, EP-A-1 614 730 specifically discloses ink compositions comprising each of a mono-oxetane, a bis-oxetane and a diepoxide.

### SUMMARY OF THE INVENTION

The invention has been made in consideration of these conventional problems, and aims to achieve the following object.

It is an object of the invention to provide an ink composition that reduces the brittleness of an image after printing, with the ink having excellent storage stability and curing properties, and an image forming method and a recorded material using the same.

The problem of the invention is solved by the following means.
[1] An ink composition comprising:
   a triaryl sulfonium salt compound as a polymerization initiator;
   a pigment dispersion containing a pigment, a dispersant and a cation-polymerizable compound and/or a solvent;
   a sensitizer;
   as a cation-polymerizable compound, at least one compound containing a monofunctional oxetane group represented by the following formula (1) in an amount of from 30 to 75 mass % relative to the total amount of the cation-polymerizable compounds contained in the ink composition 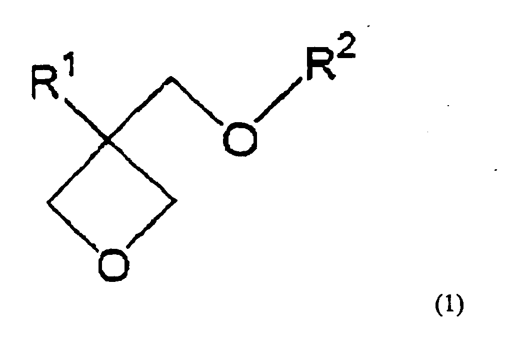 wherein R¹ represents a hydrogen atom or an alkyl group having 1 to 6 carbon atoms, and R² represents an alkyl group having 1 to 12 carbon atoms or an aryl group having 6 to 12 carbon atoms;
   as a cation-polymerizable compound, a compound containing two oxetane groups in an amount of from 10 to 45 mass % relative to the total amount of the cation-polymerizable compounds contained in the ink composition; and
   as a cation-polymerizable compound, a compound containing two oxirane groups in an amount of from 10 to 40 mass % relative to the total amount of the cation-polymerizable compounds contained in the ink composition.
[2] The ink composition as described in [1], wherein the dispersant in the pigment dispersion is a polymer having a repeating unit represented by the following formula (2): 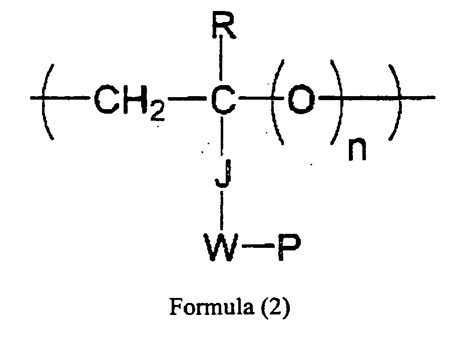 wherein in formula (2), R represents a hydrogen atom or a methyl group; J represents -CO-, -COO-, -CONR³-, -OCO-, a methylene group, or a phenylene group; R³ represents a hydrogen atom, an alkyl group or an aryl group; n represents 0 or 1; W represents a single bond or a divalent linking group; and P represents a heterocyclic residue forming a colorant.
[3] The ink composition as described in any one of [1] to [2], wherein the sensitizer is a 9,10-substituted anthracene compound.
[4] An ink composition for inkjet recording, comprising the ink composition as described in any one of [1] to [3].
[5] An image forming method comprising recording an image by inkjet recording by ejecting the ink composition as described in any one of [1] to [4].
[6] An image forming method comprising:
   recording an image on a recording material by using the ink composition as described in any one of [1] to [4], and
   curing the image recorded on the recording material by irradiation of the image with an active energy ray.
[7] The image forming method as described in [6], wherein a light emitting diode is used as a light source for the irradiation with the active energy ray.
[8] The image forming method as described in [6] or [7], wherein the central wavelength of the active energy ray is 365±20 nm.
[9] The image forming method as described in any one of [6] to [8], wherein the thickness of the cured image is from 2 to 30 µm.
[10] A recorded material formed using the ink composition as described in any one of [1] to [4].

According to the invention, it is possible to provide an ink composition that reduces the brittleness of an image after printing, with the ink having excellent storage stability and curing properties, and an image forming method and a recorded material using the same are provided.

### DETAILED DESCRIPTION OF THE INVENTION

An ink composition of the invention, and an image forming method and a recorded material using the same are specifically described below.

### <Ink composition>

An ink composition of the invention includes:
a triaryl sulfonium salt compound as a polymerization initiator;
a pigment dispersion containing a pigment, a dispersant and a cation-polymerizable compound and/or a solvent;
a sensitizer;
as a cation-polymerizable compound, at least one compound containing a monofunctional oxetane group represented by the following formula (1) in an amount of from 30 to 75 mass % relative to the total amount of the cation-polymerizable compounds contained in the ink composition 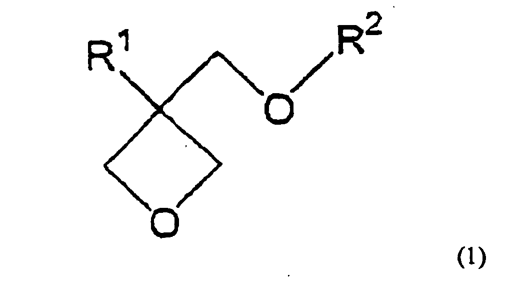 wherein R¹ represents a hydrogen atom or an alkyl group having 1 to 6 carbon atoms, and R² represents an alkyl group having 1 to 12 carbon atoms or an aryl group having 6 to 12 carbon atoms;
as a cation-polymerizable compound, a compound containing two oxetane groups in an amount of from 10 to 45 mass % relative to the total amount of the cation-polymerizable compounds contained in the ink composition; and
as a cation-polymerizable compound, a compound containing two oxirane groups in an amount of from 10 to 40 mass % relative to the total amount of the cation-polymerizable compounds contained in the ink composition.

The ink composition of the invention is composed such that, after recording an image on a recording material, the recorded image can be cured by irradiation with an active energy ray. The ink composition of the invention includes (a) as a cation-polymerizable compound, at least one compound containing a monofunctional oxetane group represented by formula (1) in an amount of 30 to 75 mass% relative to the total amount of the cation-polymerizable compounds, and the brittleness thereof is reduced. The ink composition of the invention further includes (b) a triaryl sulfonium salt compound as a polymerization initiator, and (d) a sensitizer, thus providing high sensitivity and an excellent curing property, even when using an LED of low illumination intensity as a light source of an active energy ray. Moreover the ink composition of the invention includes (c) a pigment dispersion containing a pigment, a dispersant, and a cation-polymerizable compound and/or a solvent, thus reducing thickening of the ink, and enhancing storage stability.

The ink composition of the invention may be a colorless ink that does not contain a colorant, but the ink composition preferably contains a colorant. The ink composition of the invention may contain various additives as needed.

Each component of the ink composition of the invention is explained below.

### Cation-polymerizable compound

The ink composition of the invention includes, as a cation-polymerizable compound, at least one compound containing a monofunctional oxetane group represented by formula (1) in an amount of 30 and 75 mass% relative to the total amount of cation-polymerizable compounds. The cation-polymerizable compound is a compound that initiates a polymerization reaction by active species generated from a photopolymerization initiator, and thus is cured.

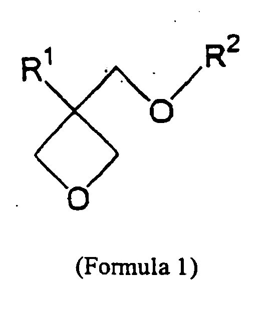

In formula (1), R¹ is preferably a lower alkyl group having 1 to 4 carbon atoms, and more preferably an ethyl group. R² is preferably a butyl group, a hexyl group, a 2-ethyl hexyl group, a cyclohexyl group, a phenyl group, a benzyl group, a tolyl group, a methoxyphenyl group, or a methoxybenzyl group.

Preferable examples of the compound containing a monofunctional oxetane group represented by formula (1) include a 3-ethyl 3-(butoxymethyl) oxetane, a 3-ethyl 3-(hexyloxymethyl) oxetane, a 3-ethyl 3-(cyclohexyloxymethyl) oxetane, a 3-ethyl 3-(2-ethylhexyloxymethyl) oxetane, a 3-ethyl 3-(phenoxymethyl) oxetane, a 3-ethyl 3-benzyloxymethyl oxetane, and a 3-ethyl 3-(p-methoxy benzyloxymethyl) oxetane.

In the invention, the compound containing a monofunctional oxetane group represented by formula (1) is contained in an amount of 30 to 75 mass% relative to the total amount of the cation-polymerizable compounds. If the amount is less than 30 mass%, the brittleness of an image after printing cannot be reduced, and if the amount is more than 75 mass%, the curing property deteriorates. The amount of a compound containing a monofunctional oxetane group is preferably 35 to 70 mass%, more preferably 40 to 60 mass%.

In the invention, in addition to the compound containing a monofunctional oxetane group represented by formula (1), the ink composition also includes a compound containing two oxetane groups in an amount of 10 to 45 mass% relative to the total amount of the cation-polymerizable compounds, and a compound containing two oxirane groups in an amount of 10 to 40 mass% relative to the total amount of the cation-polymerizable compounds, from the viewpoint of excellent curing property. The amount of the compound containing two oxetane groups is more preferably 20 to 35 mass% relative to the total amount of the cation-polymerizable compounds, and the amount of the compound containing two oxirane groups is more preferably 10 and 30 mass% relative to the total amount of the cation-polymerizable compounds.

### Compound containing two oxetane groups/containing two oxirane groups

The compound containing two oxetane groups/containing two oxirane groups can be polymerized and cured by irradiation with an active energy ray by the action of a photopolymerization initiator described below, and the curing reaction can be finished in a short time. Therefore, it is particularly effective for prevention of fading of the dye that is easily light-faded, during curing (polymerizing), and prevention of fading of the cured image, and an image having excellent coloring (hue), color concentration, and sharpness and having a high fastness similar to that of a pigment may be formed.

### Compound containing two oxetane groups

The compound containing two oxetane groups may be properly selected from the compounds containing two oxetane groups (oxethanyl groups) in a molecule.

For example, the compound having two oxetane groups in a molecule is preferably represented by formula (1-a).

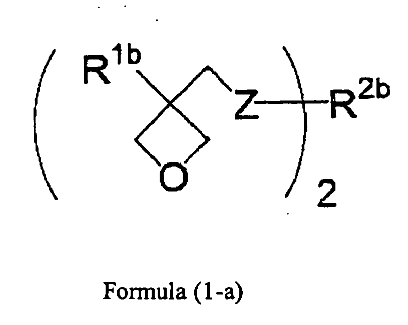

In formula (1-a), Z represents an oxygen atom or a sulfur atom, and preferably represents an oxygen atom.

In formula (1-a), R^{1b} represents a hydrogen atom, a fluorine atom, an alkyl group having 1 to 6 carbon atoms (e.g., a methyl group, an ethyl group, a propyl group, or a butyl group), a fluoroalkyl group having 1 to 6 carbon atoms, an allyl group, an aryl group, or a furyl group.

R^{2b} represents a linear or branched alkylene group having 1 to 12 carbon atoms, a linear or branched poly (alkyleneoxy) group, or a divalent group selected from the group consisting of formulae (3), (4), and (5).

The linear or branched alkylene group having 1 to 12 carbon atoms is preferably a group represented by formula (2). In formula (2), R³ represents a lower alkylene group, such as a methylene group, an ethylene group, or a propylene group.

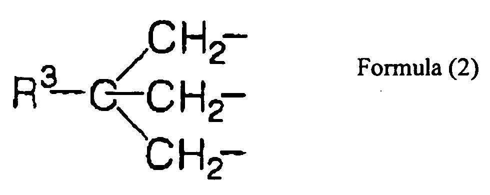

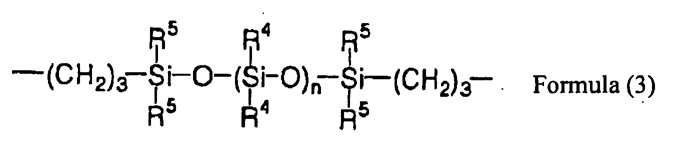

In formula (3), n is 0 or an integer of 1 to 2000, R⁴ represents an alkyl group having 1 to 10 carbon atoms (e.g., a methyl group, an ethyl group, a propyl group, a butyl group, a pentyl group, a hexyl group, a heptyl group, an octyl group, or a nonyl group), or a group selected from the groups represented by formula (6). R⁵ represents an alkyl group having 1 to 10 carbon atoms (e.g., a methyl group, an ethyl group, a propyl group, a butyl group, a pentyl group, a hexyl group, a heptyl group, an octyl group, or a nonyl group), and is preferably a methyl group.

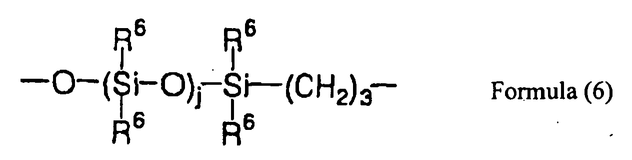

In formula (6), j is 0 or an integer of 1 to 100, R⁶ represents an alkyl group having 1 to 10 carbon atoms (e.g., a methyl group, an ethyl group, a propyl group, a butyl group, a pentyl group, a hexyl group, a heptyl group, an octyl group, or a nonyl group), and is preferably a methyl group.

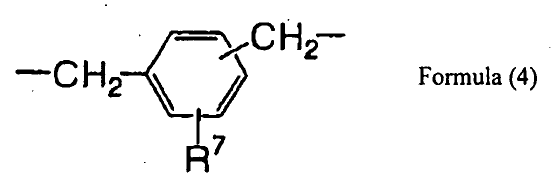

In formula (4), R⁷ represents a hydrogen atom, an alkyl group having 1 to 10 carbon atoms (e.g., a methyl group, an ethyl group, a propyl group, a butyl group, a pentyl group, a hexyl group, a heptyl group, an octyl group, or a nonyl group), an alkoxy group having 1 to 10 carbon atoms (e.g., a methoxy group, an ethoxy group, a propoxy group, a butoxy group, or a pentoxy group), a halogen atom (e.g., a fluorine atom, a chlorine atom, a bromine atom, an iodine atom), a nitro group, a cyano group, a mercapto group, an alkoxycarbonyl group (e.g., a methyloxy carbonyl group, an ethyloxy carbonyl group, a butyloxy carbonyl group), or a carboxyl group.

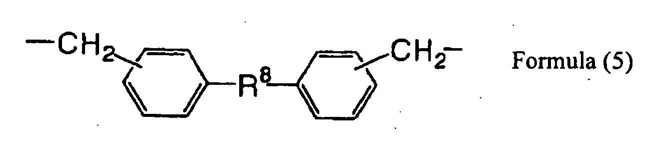

In formula (5), R⁸ represents an oxygen atom, a sulfur atom, NH, SO, SO₂, CH₂, C(CH₃)₂, or C(CF₃)₂.

Among the compounds containing oxethane groups represented by formula (1-a), preferable examples include a compound represented by formula (1-a) wherein R^{1b} represents a lower alkyl group (e.g., a methyl group, an ethyl group, or a propyl group), and R^{1b} is particularly preferably an ethyl group; R^{2b} represents a hexamethylene group, a group represented by formula (4) wherein R⁷ is a hydrogen atom, a group represented by formula (2) wherein R³ is an ethylene group, or a group represented by formula (3) wherein R⁵ is a methyl group, and R⁴ is a group represented by formula (6) wherein R⁶ is a methyl group; Z represents an oxygen atom; and m is 2.

Examples of the compound containing two or more oxethane groups in a molecule include the compounds represented by formula (7) or (8).

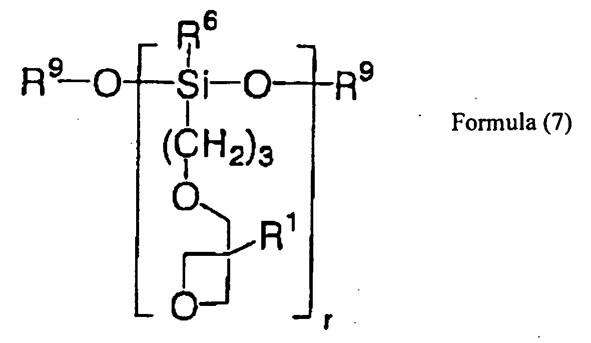

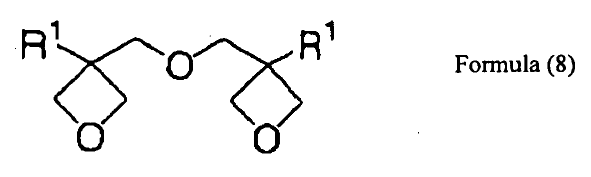

In formula (7), r represents an integer of 25 to 200, and R⁹ represents an alkyl group having 1 to 4 carbon atoms or a trialkylsilyl group. R¹ in formula (7) and formula (8), and R⁶ in formula (7) have the same definition as that of R^{1b} in formula (1-a) and R⁶ in formula (6) respectively.

Preferable examples of the compound containing oxethane groups represented by formula (1-a) are listed below. However, the invention is not limited to these examples alone.

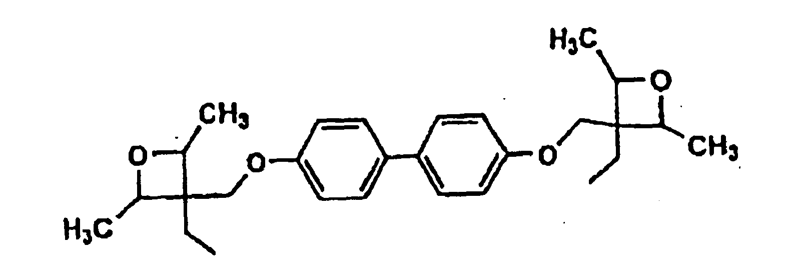

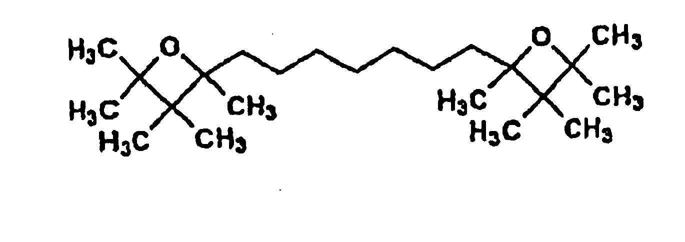

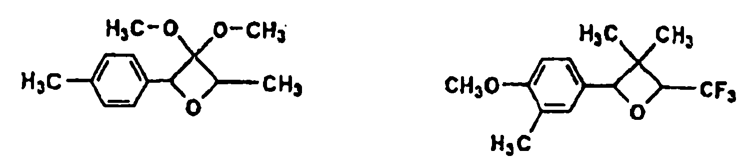

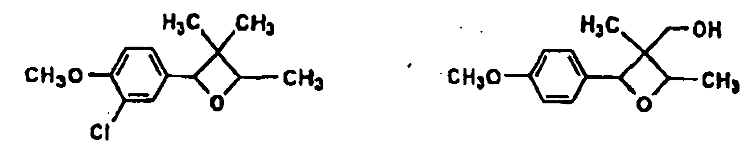

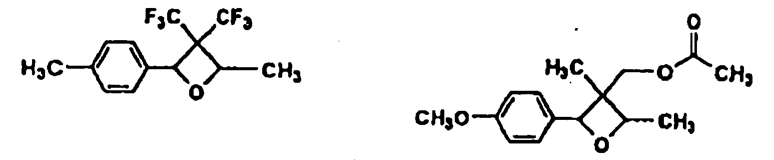

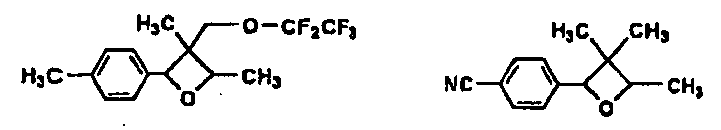

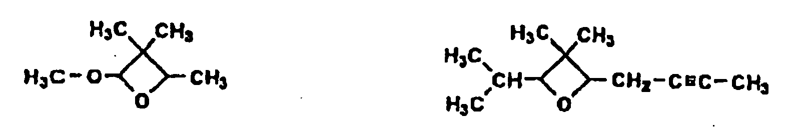

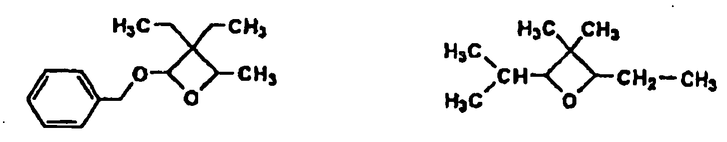

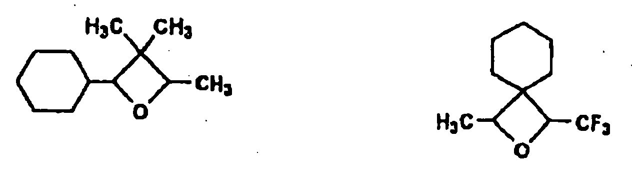

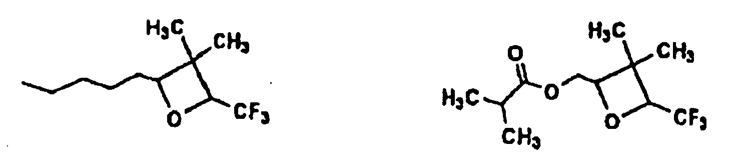

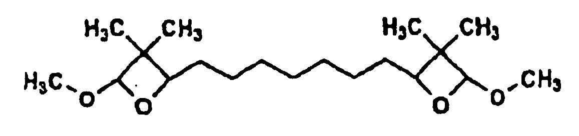

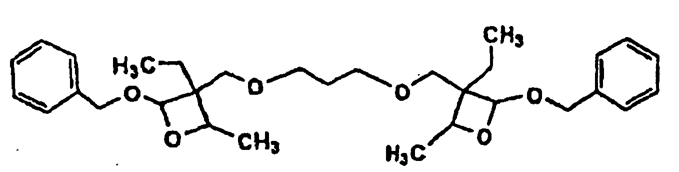

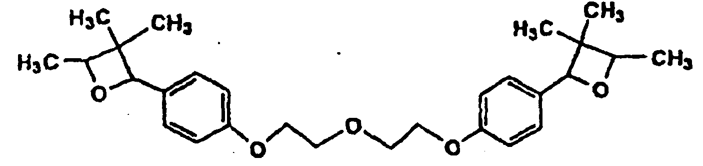

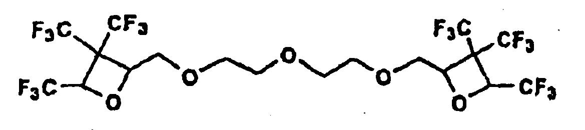

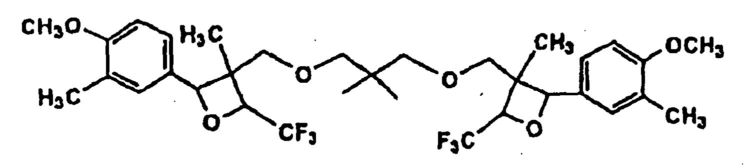

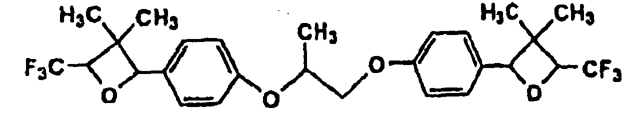

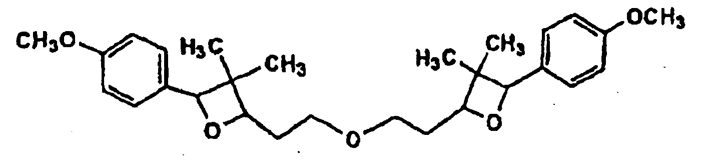

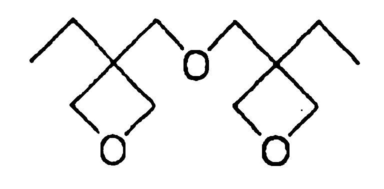

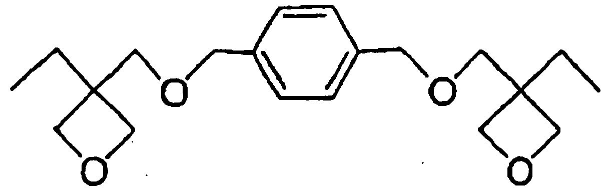

Regarding a synthesis of compounds containing an oxethane group, the following documents can be referred: (1) H. A. L. Curless, "Synthetic Organic Photochemistry", Plenum, New York (1984), (2) M. Braun, Nachr. Chem. Tech. Lab., 33, 213 (1985), (3) S. H. Schroeter, J. Org. Chem., 34, 5, 1181 (1969), (4) D. R. Arnold, Adv. Photochem., 6, 301 (1968), (5) "Heterocyclic Compounds with Three- and Four-membered Rings," Part Two, Chapter IX, Interscience Publishers, John Wiley & Sons, New York (1964), (6) Bull. Chem. Soc. Jpn., 61, 1653 (1988), (7) Pure Appl. Chem., A29 (10), 915 (1992); (8) Pure Appl. Chem., A30 (2& 3), 189 (1993), (9) JP-ANo. 6-16804; (10) German Patent No. 1,021,858 and so on.

The compound containing oxethane groups represented by formula (1-a) can be also used either alone or in combination of two or more kinds.

### Compound containing two oxirane groups

The compound containing two oxirane groups is a compound containing two oxirane groups (oxilanyl groups) having a oxirane ring in a molecule, and can be specifically selected from those generally used as an epoxy resin and can be either a monomer, a oligomer, or a polymer.

Specific examples of compound containing oxirane groups include an aromatic epoxy resin, an alicyclic epoxy resin, and an aliphatic epoxy resin as conventionally known. Herein, the epoxy resin may be a monomer, an oligomer, or a polymer.

The aromatic epoxy resin is preferably a di- or a poly-glycidyl ether manufactured by reaction of a polyhydric phenol having at least one aromatic nucleus or an alkylene oxide adduct thereof and epichlorohydrine. Examples include a di- or a poly-glycidyl ether of a bisphenol A or a alkylene oxide adduct thereof, a di- or a poly-glycidyl ether of a hydrogenated bisphenol A or an alkylene oxide adduct thereof, and a novolak type epoxy resin. As alkylene oxide, an ethylene oxide or a propylene oxide may be used.

Preferable examples of the alicyclic epoxy resin include a compound containing a cyclohexene oxide and a compound containing a cyclopentene oxide, which can be obtained by epoxidizing a compound having at least one cycloalkane ring such as a cyclohexene ring or a cyclopentene ring, by using a proper oxidizer such as hydrogen peroxide or peracid. Examples thereof include 3,4-epoxy cyclohexyl methyl-3,4-epoxy cyclohexyl carboxylate.

Preferable examples of the aliphatic epoxy resin include a di- or a poly-glycidyl ether of an aliphatic polyhydric alcohol or an alkylene oxide adduct thereof. Examples thereof include diglycidyl ethers of an alkylene glycol, such as a diglycidyl ether of an ethylene glycol, a diglycidyl ether of a propylene glycol, a diglycidyl ether of 1, 6-hexane diol; polyglycidyl ethers of a polyhydric alcohol, such as a di- or a tri-glycidyl ether of a glycerol or a alkylene oxide adduct thereof; diglycidyl ethers of polyalkylene glycol, such as a diglycidyl ether of a polyethylene glycol or an alkylene oxide adduct thereof, a diglycidyl ether of a polypropylene glycol or an alkylene oxide adduct thereof. Examples of alkylene oxide include an ethylene oxide and a propylene oxide.

Examples of the compound containing oxirane groups other than the above-described compounds include monomers having one oxirane ring in a molecule, such as a monoglycidyl ether of an aliphatic higher alcohol, a monoglycidyl ether of a phenol, a cresol, or an alkylene oxide adduct thereof.

The compound containing oxirane groups may be used either alone or in combination of two or more kinds.

Preferable examples of the compound containing oxirane groups are listed below. However, the invention is not limited to these examples alone.

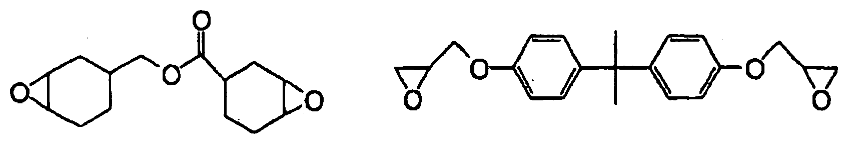

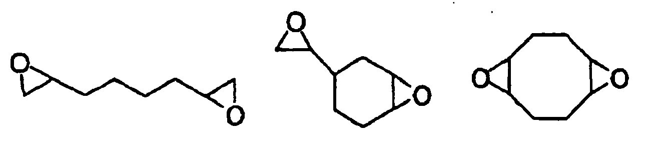

In the invention, an "active energy ray" is an active ray that produces radicals or cations from a photopolymerization initiator, and examples thereof includes ultraviolet rays (UV light), visible rays, γ-rays, α-rays, X-rays, and other electron rays. Examples of specific light sources include an LD, an LED (light emitting diode), a fluorescent lamp, a low-pressure mercury lamp, a high-pressure mercury lamp, a metal halide lamp, a carbon arc lamp, a xenon lamp, a chemical lamp and the like. Preferable examples of the light source are an LED, a high-pressure mercury lamp, and a metal halide lamp. The central wavelength of these active energy rays is preferable to be 365±20 nm. In the invention, high curing property can be realized even by a light source of low illumination intensity such as an LED.

### Polymerization initiator

### Triaryl sulfonium salt compound

The ink composition of the invention contains a triaryl sulfonium salt compound as a polymerization initiator. The compound having a triaryl sulfonium salt structure used in the invention can be easily synthesized by methods disclosed, for example, in J. Amer. Chem. Soc., vol. 112 (16), 1990, pp. 6004-6015, J. Org. Chem. 1988, pp. 5571-5573, WO 02/081439A1, or European Patent (EP) No. 1113005.

Examples of the triaryl sulfonium salt compound used in the invention are shown below.

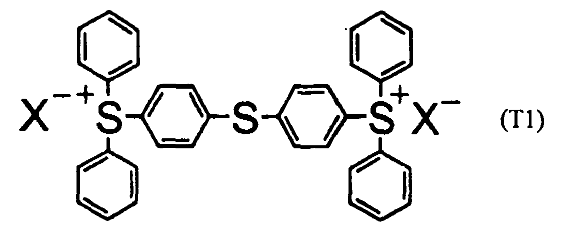

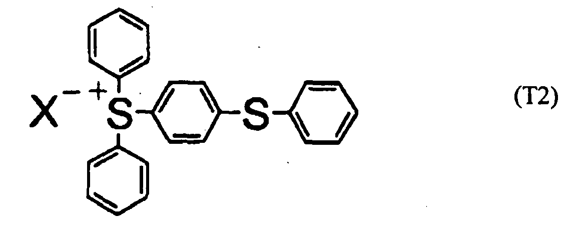

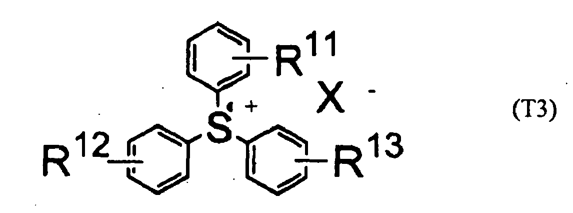

In formula (T3), R¹¹, R¹², R¹³ each independently represent a hydrogen atom, an alkyl group, an alkoxy group or a halogen atom, and X⁻ represents a counter-anion.

In formula (T3), R¹¹, R¹², R¹³ are each preferably a hydrogen atom, a methyl group, or a chlorine atom.

In formulae (T1) to (T3), X- may be, for example, a sulfonic anion, a benzoyl formic anion, PF6-, SbF₆⁻, BF₄⁻, ClO₄⁻, B(C₆H₅)₄⁻, a carboxylic anion, a sulfinic anion, a sulfuric anion, a borate anion, a halogen anion, a polymer type sulfonic anion, or a polymer type carboxylic anion. In particular, PF6', SbF₆, B(C₆H₅)₄⁻, and BF₄⁻ are preferable, and PF₆⁻ is particularly preferable.

### Pigment dispersion

The ink composition of the invention includes a pigment, a dispersant, and a pigment dispersion containing a cation-polymerizable compound and/or a solvent. Hereinafter, the components of the pigment dispersion will be described.

### Pigment

The pigment is not particularly specified, and any commercial product, such as an organic pigment and an inorganic pigment, a dispersion in which a pigment is dispersed in an insoluble resin or the like as a disperse medium, or a pigment of which surface is grafted by a resin may be used. Resin particles colored by a dye and the like may be also used.

Examples of these pigments include the pigments described, for example, in Seijiro Itoh, "Dictionary of Pigments" (2000), W. Herbst and K. Hunger, "Industrial Organic Pigments", and JP-A Nos. 2002-12607, 2002-188025, 2003-26978, and 2003-342503.

Specific examples of the organic and inorganic pigments for use in the invention include the following. Examples of pigments of yellow color include: monoazo pigments such as C.I. Pigment Yellow 1 (Fast Yellow G, etc.) and C.I. Pigment Yellow 74; disazo pigments such as C.I. Pigment Yellow 12 (Disazo Yellow AAA, etc.) and C.I. Pigment Yellow 17; non-benzidine azo pigments such as C.I. Pigment Yellow 180; azolake pigments such as C.I. Pigment Yellow 100 (tartrazine yellow lake, etc.); condensation azo pigments such as C.I. Pigment Yellow 128, C.I. Pigment Yellow 93 and C.I. Pigment Yellow 95 (Condensation Azo Yellow GR, etc.); acidic-dye lake pigments such as C.I. Pigment Yellow 115 (quinoline yellow lake, etc.); basic-dye lake pigments such as C.I. Pigment Yellow 18 (thioflavin lake, etc.); anthraquinone pigments such as fravantrone yellow (Y-24); isoindolinone pigments such as isoindolinone yellow 3RLT (Y-110); quinophtharone pigments such as quinophtharone yellow (Y- 13 8); isoindoline pigments such as isoindoline yellow (Y- 13 9); nitroso pigments such as C.I. Pigment Yellow 153 (nickel nitroso yellow, etc.); and metal-complex-salt azomethine pigments such as C.I. Pigment Yellow 117 (copper azomethine yellow, etc.).

Examples of red or magenta pigments include: monoazo pigments such as C.I. Pigment Red 3 (toluidine red, etc.); disazo pigments such as C.I. Pigment Red 38 (Pyrazolone Red B, etc.); azolake pigments such as C.I. Pigment Red 53:1 (Lake Red C, etc.) and C.I. Pigment Red 57:1 (Brilliant Carmine 6B); condensation azo pigments such as C.I. Pigment Red 144 (Condensation Azo Red BR, etc.); acidic dye lake pigments such as C.I. Pigment Red 174 (Phloxine B Lake, etc.); basic dye lake pigments such as C.I. Pigment Red 81 (Rhodamine 6G' Lake, etc.); anthraquinone pigments such as C.I. Pigment Red 177 (dianthraquinolyl red, etc.); thioindigo pigments such as C.I. Pigment Red 88 (Thioindigo Bordeaux, etc.); perynone pigments such as C.I. Pigment Red 194 (perynone red, etc.); perylene pigments such as C.I. Pigment Red 149 (perylene scarlet, etc.); quinacridone pigments such as C.I. Pigment Violet 19 (unsubstituted quinacridone) and C.I. Pigment Red 122 (quinacridone magenta, etc.); isoindolinone pigments such as C.I. Pigment Red 180 (Isoindolinone Red 2BLT, etc.); and alizarin lake pigments such as C.I. Pigment Red 83 (madder lake, etc.).

Examples of blue or cyan pigments include disazo pigments such as C.I. Pigment Blue 25 (dianisidine blue, etc.); phthalocyanine pigments such as C.I. pigment blue 15 (phthalocyanine blue, etc.); acidic dye lake pigments such as C.I. pigment blue 24 (peacock blue lake, etc.); basic dye lake pigments such as C.I. Pigment Blue 1 (Victoria Pure Blue BO Lake, etc.); anthraquinone pigments such as C.I. pigment blue 60 (indanthron blue, etc.); and alkali blue pigments such as C.I. Pigment Blue 18 (alkali blue V-5:1).

Examples of green pigments include phthalocyanine pigments such as C.I. Pigment Green 7 (phthalocyanine green) and C.I. Pigment Green 36 (phthalocyanine green); and azo metal complex pigments such as C.I. Pigment Green 8 (nitroso green).

Examples of orange pigments include isoindoline pigments such as C.I. Pigment Orange 66 (isoindoline orange); and anthraquinone pigments such as C.I. Pigment Orange 51 (dichloropyranthron orange).

Examples of black pigments include carbon black, titanium black, and aniline black.

Specific examples of white pigments include basic lead carbonate (2PbCO₃Pb(OH)₂, so-called silver white), zinc oxide (ZnO, so-called zinc white), titanium oxide (TiO₂, so-called titanium white), and strontium titanate (SrTiO₃, so-called titanium strontium white).

Since titanium oxide has a lower specific gravity and a higher refractive index than other white pigments and is more stable chemically or physically, titanium oxide has a greater masking and coloring potential as a pigment, and is further excellent in resistance to acid or alkali and other environmental factors. Thus, the use of titanium oxide as a white pigment is preferable. Of course, other white pigment (including white pigments other than those described above) may be used as necessary.

### Dispersant

Examples of the dispersants include a carboxylic ester containing a hydroxyl group, a salt of long-chain polyamino amide and an ester of high molecular weight acid, a salt of polycarboxylic acid of high molecular weight, an unsaturated acid ester of high molecular weight, a high molecular copolymer, a modified polyacrylate, an aliphatic polycarboxylic acid, a naphthalene sulfonate-formalin condensate, a polyoxy ethylene alkyl phosphoric ester, and pigment derivatives. Other commercial high molecular dispersants, such as SOLSPERSE Series of Lubrizol may be used.

As a dispersion auxiliary, a synergist depending on pigments may be properly used. These dispersants and dispersion auxiliaries are preferably added in an amount of 1 to 50 parts by mass relative to 100 parts by mass of the pigment.

The dispersant of the invention is preferable to be a polymer having a repeating unit represented by formula (2). By using the polymer compound having a specific repeating unit, dispersion can be further stabilized by a steric repulsive effect between the pigment and the polymer chain.

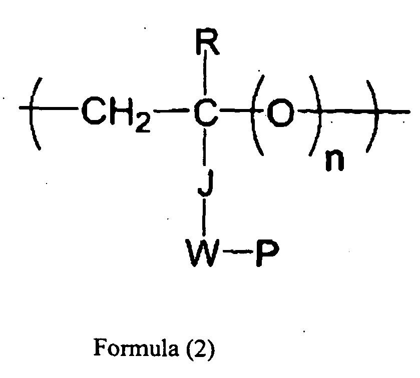

In formula (2), R represents a hydrogen atom or a methyl group, J represents -CO-, -COO-, -CONR³-, -OCO-, a methylene group, or a phenylene group, R³ represents a hydrogen atom, an alkyl group or an aryl group, n is 0 or 1, W represents a single bond or a divalent linking group, and P represents a heterocyclic residue forming a colorant.

In formula (2), J represents -CO-, -COO-, -CONR³-, -OCO-, a methylene group, or a phenylene group, and among these, J is preferably -COO-, -CONH-, or a phenylene group. R³ represents a hydrogen atom, an alkyl group (e.g., a methyl group, an ethyl group, an n-propyl group, an i-propyl group, an n-butyl group, an n-hexyl group, an n-octyl group, a 2-hydroxyethyl group, a phenylmethyl group, or a phenylethyl group), or an aryl group (e.g., a phenyl group), and among these, R³ is preferably a hydrogen atom, a methyl group, or an ethyl group.

W represents a single bond or a divalent linking group. The divalent linking group may be, for example, a straight-chain, branched or cyclic alkylene group, an aralkylene group, an arylene group, and a combination of one or more of the above groups and -NR⁴-, NR⁴R⁵-, -COO-, -OCO-, -O-, -SO₂NH-, NHSO₂- -NHCOO-, -OCONH-, or the like. They may have a substituent.

The alkylene group represented by W is preferably an alkylene group having 1 to 10 carbon atoms, more preferably an alkylene group having 1 to 4 carbon atoms. Examples thereof include a methylene group, an ethylene group, a propylene group, a butylene group, a pentylene group, a hexylene group, an octylene group, and a decylene group, and in particular a methylene group, an ethylene group, a propylene group and the like are preferable.

The aralkylene group represented by W is preferably an aralkylene group having 7 to 13 carbon atoms, and examples thereof include a benzylidene group and a cinnamylidene group.

The arylene group represented by W is preferably an arylene group having 6 to 12 carbon atoms, and examples thereof include a phenylene group, a cumenylene group, a mesitylene group, a tolylene group, and a xylene group, and in particular a phenylene group is preferable.

R⁴ and R⁵ each independently represent a hydrogen atom or an alkylene group, and each of R⁴ and R⁵ is preferably a hydrogen atom, a methyl group, an ethylene group, or a propyl group.

Among the linking groups represented by W, a single bond and an alkylene group are particularly preferable, and in particular a methylene group, an ethylene group, and a 2-hydroxy propylene group are preferable.

n represents 0 or 1, and is preferably 0.

In formula (2), P represents a heterocyclic residue forming a colorant, and examples of the colorant include the organic pigments described above, oil soluble dyes, and water-soluble dyes. The colorant is preferably a pigment. Examples of the heterocyclic residue include residues including a structure of any one of pyrrole, furan, thiophene, imidazole, oxazole, thiazole, pyrazole, isoxazole, isothiazole, pyridine, pyridazine, pyrimidine, pyrazine, piperidine, piperazine, or morpholine.

The heterocyclic residue is particularly preferable to be a heterocyclic residue analogous to the pigment to be used. For example, when the pigment is a quinacridone pigment, acridone, anthraquinone or the like is preferably used.

As the unit represented by formula (2), preferable examples are given below, but the invention is not limited to these examples alone.

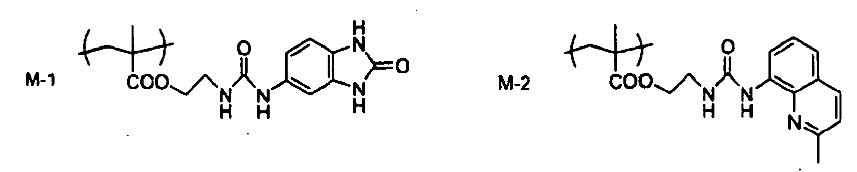

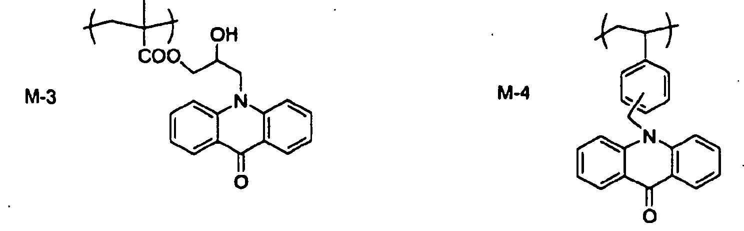

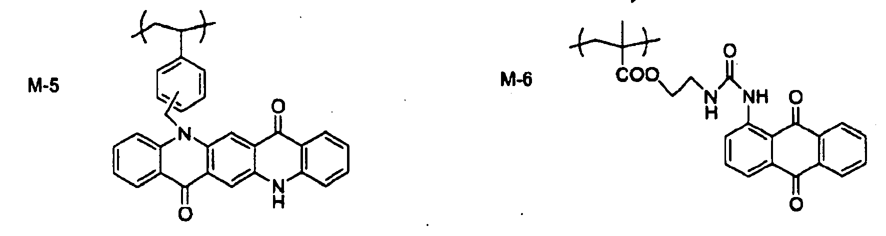

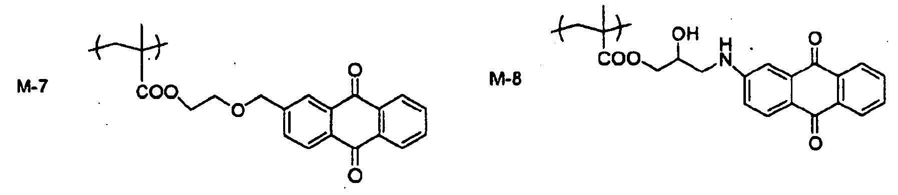

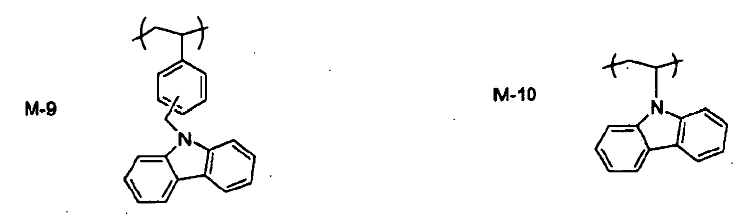

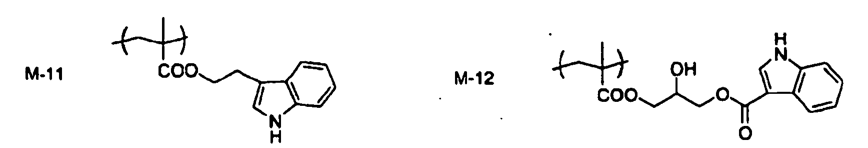

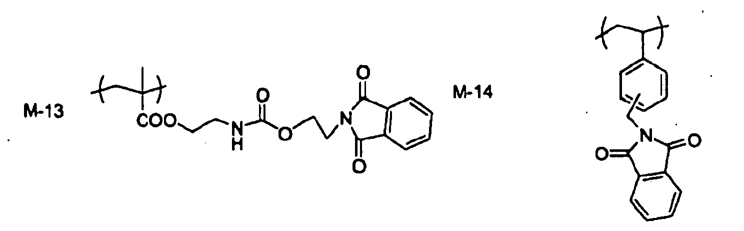

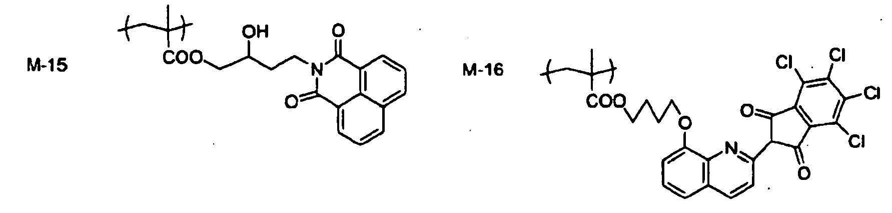

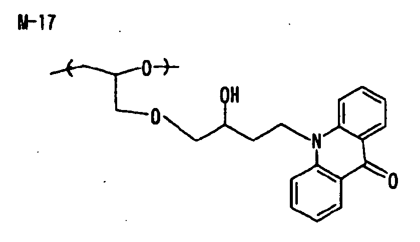

To disperse the pigment, various dispersion machines can be used, such as a ball mill, a sand mill, an attriter, a roll mill, a jet mill, a homogenizer, a paint shaker, a kneader, an agitator, a HENSCHEL mixer, a colloid mill, an ultrasonic homogenizer, a pearl mill, and a wet jet mill.

In the ink composition, a solvent may be added as a dispersion medium of components such as a pigment, or the polymerizable compound of low molecular weight may be used as a dispersion medium without adding solvent. However, since the ink composition of the invention is a radiation curing type ink, it is preferable not to contain solvent in order to cure the ink after the ink is applied on a recording medium. This is because the solvent, if remaining in the cured ink image, may cause deterioration of solvent resistance, or problems of VOC (volatile organic compound) in the residual solvent. From such viewpoint, as the dispersion medium, it is preferable to use a polymerizable compound, in particular, to select a cation-polymerizable monomer of lowest viscosity from the viewpoint of improving dispersion suitability and handling performance of the ink composition.

The volume-average particle diameter of pigment particles is preferably 0.02 to 0.60 µm, the maximum particle diameter is preferably 3 µm or less, or more preferably 1 µm or less. It is preferable to select the pigment, the dispersant and the dispersion medium, and to set the dispersion condition and the filtering condition so that the volume-average diameter and the maximum particle diameter are within the above range. By this particle diameter management, clogging of a head nozzle is suppressed, and the ink storage stability, an ink transparency, and the curing sensitivity can be maintained.

The pigment dispersion of the invention includes a cation-polymerizable compound and/or a solvent. The cation-polymerizable compound and the solvent are described below.

### Cation-polymerizable compound

As the cation-polymerizable compound, for example, a cation-polymerizable monomer known as a photo cation-polymerizable monomer can be used. Examples of the cation-polymerizable monomer include vinyl ether compounds, oxethane compounds, and oxirane compounds disclosed in publications such as JP-A Nos. 6-9714, 2001-31892, 2001-40068, 2001-55507, 2001-310938, 2001-310937, and 2001-220526.

Examples of the vinyl ether compound include di- or tri-vinyl ether compounds such as ethylene glycol divinyl ether, diethylene glycol divinyl ether, triethylene glycol divinyl ether, propylene glycol divinyl ether, dipropylene glycol divinyl ether, butane diol divinyl ether, hexane diol divinyl ether, cyclohexane dimethanol divinyl ether, and trimethylol propane trivinyl ether; mono vinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenylether-O-propylene carbonate, dodecyl vinyl ether, diethylene glycol monovinyl ether, and octadecyl vinyl ether.

Among the vinyl ether compounds, di- or tri-vinyl ether compounds are preferred from the viewpoint of curing property, adhesion with recording medium, and surface hardness of formed image, and in particular divinyl ether compounds are preferred.

### Compound containing an oxethane group and/or an oxirane group

The pigment dispersion liquid of the invention preferably contains at least one selected from a compound containing an oxethane group or a compound containing an oxirane group, as the cation-polymerizable compound, and more preferably contains at least one compound containing an oxethane group and at least one compound containing an oxirane group.

These compounds are polymerized by irradiation with active energy rays by the action of a photopolymerization initiator described later, and are cured. These compounds enable curing reaction in a short time, and hence very effective from the viewpoint of working efficiency.

When both a compound containing an oxethane group (p) and a compound containing an oxirane group (q) are used, the blending ratio (by mass) p/q is preferably in a range of 50/50 to 95/5 from the viewpoint of effectively enhancing the curing properties, more preferably 67/33 to 90/10.

### Compound containing an oxirane group

The compound containing an oxirane group is a compound containing at least one oxirane group (oxiranyl group) having an oxirane ring in its molecule, and can be specifically selected from those generally used as epoxy resins. The compound containing an oxirane group may be of any one of a monomer, an oligomer, or a polymer.

Specific examples of the compound containing an oxirane group include known aromatic epoxy resins, alicyclic epoxy resins, and aliphatic epoxy resins. Herein, the epoxy resin may be any one of a monomer, an oligomer, or a polymer.

Preferable examples of the aromatic epoxy resin include a di- or poly-glycidyl ether manufactured by reaction of a polyhydric phenol having at least one aromatic nucleus or an alkylene oxide adduct thereof and epichlorohydrine. Examples thereof include a di- or poly-glycidyl ether of bisphenol A or an alkylene oxide adduct thereof, a di- or poly-glycidyl ether of hydrogenated bisphenol A or an alkylene oxide adduct thereof, and novolak type epoxy resin. As the alkylene oxide, ethylene oxide or propylene oxide may be used.

Preferable examples of the alicyclic epoxy resin include a cyclohexene oxide- or cyclopentene oxide-containing compound that is obtained by epoxydizing a compound having at least one cycloalkane ring such as a cyclohexene or cyclopentene ring by using a proper oxidizer such as hydrogen peroxide or peracid. Examples thereof include 3,4-epoxy cyclohexyl methyl-3,4-epoxy cyclohexyl carboxylate and the like.

Preferable examples of the aliphatic epoxy resin include a di- or poly-glycidyl ether of an aliphatic polyhydric alcohol or an alkylene oxide adduct thereof. Examples thereof include diglycidyl ethers of an alkylene glycol such as diglycidyl ether of ethylene glycol, diglycidyl ether of propylene glycol, and diglycidyl ether of 1,6-hexane diol; polyglycidyl ethers of a polyhydric alcohol such as di- or tri-glycidyl ether of glycerol or an alkylene oxide adduct thereof ; diglycidyl ethers of a polyalkylene glycol such as diglycidyl ether of polyethylene glycol or an alkylene oxide adduct thereof, diglycidyl ether of polypropylene glycol or an alkylene oxide adduct thereof. Examples of the alkylene oxide include ethylene oxide and propylene oxide.

Other examples of the compound containing an oxirane group include monomers having one oxirane ring in its molecule, such as a monoglycidyl ether of an aliphatic higher alcohol, a monoglycidyl ether of phenol, cresol or an alkylene oxide adduct thereof.

The compound containing an oxirane group may be used either alone or in combination of two or more thereof.

### Solvent

As the solvent to be used in dispersion of pigment, it is preferable to use a solvent of the boiling point of 200°C or higher from the viewpoint of nonvolatility. Usable compounds are listed, for example, in "New Solvent Pocket Book," edited by Association of Organic Synthetic Chemistry, published by Ohm-Sha.

Usable examples of solvent include esters such as diethyl phthalate, dibutyl phthalate, dioctyl phthalate, dioctyl adipate, didecyl adipate, dibutyl maleate, dioctyl maleate, triphenyl phosphate, tricresyl phosphate.

Other examples of solvent include polyhydric alcohols such as triethylene glycol monomethyl ether, triethylene glycol dimethyl ether, triethylene glycol monoethyl ether, dipropylene glycol monomethyl ether, dipropylene glycol mono-n-propyl ether, dipropylene glycol mono-n-butyl ether, tripropylene glycol, tripropylene glycol monomethyl ether, tripropylene glycol mono-n-butyl ether and their derivatives.

### Sensitizer

The ink composition of the invention includes a sensitizer.

Examples of the sensitizer include those belonging to the following compound classes and having absorption wavelengths in the range of 350 to 450 nm: multinuclear aromatics (e.g., pyrene, perylene, triphenylene and 2-ethyl-9,10-dimethoxy anthracene), xanthenes (e.g., fluorescein, eosin, erythrosine, rhodamine B, and Rose Bengal), cyanines (e.g., thiacarbocyanine and oxacarbocyanine), merocyanines (e.g., merocyanine and carbomerocyanine), thiazines (e.g., thionine, methylene blue, and toluidine blue), acridines (e.g., acridine orange, chloroflavin, and acryflavin), anthraquinones (e.g., anthraquinone), squaliums (e.g., squalium), coumarins (e.g., 7-diethylamino-4-methyl coumarin).

Examples of the sensitizer which may be used in the invention include compounds represented by the following formulae (vi) to (xiv):

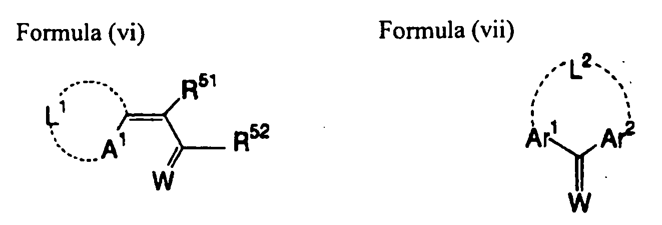

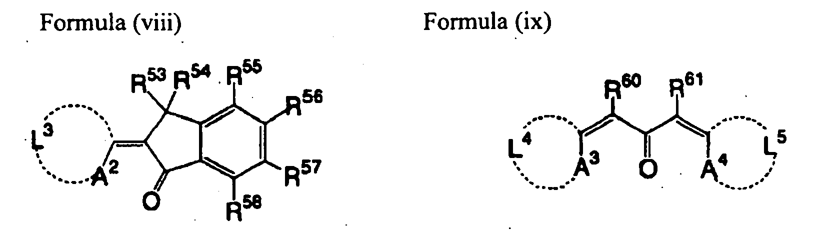

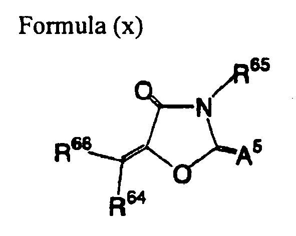

In formula (vi), A¹ represents a sulfur atom or NR⁵⁰, R⁵⁰ represents an alkyl group or an aryl group, L¹ represents a nonmetallic atomic group which, together with A¹ and the carbon atom adjacent thereto, forms a basic nucleus of a dye, R⁵¹ and R⁵² each independently represent a hydrogen atom or a monovalent nonmetallic atomic group, R⁵¹ and R⁵² may be bound to each other to form an acidic nucleus of a dye, and W represents an oxygen atom or a sulfur atom.

In formula (vii), Ar¹ and Ar² each independently represent an aryl group, and are bound to each other via a linkage L² which represents -O- or -S-. W has the same definition as in formula (vi).

In formula (viii), A² represents a sulfur atom or NR⁵⁹, R⁵⁹ represents an alkyl group or an aryl group, L³ represents a nonmetallic atomic group which, together with A² and the carbon atom adjacent thereto, forms a basic nucleus of a dye, and R⁵³, R⁵⁴, R⁵⁵, R⁵⁶, R⁵⁷ and R⁵⁸ each independently represent a monovalent nonmetallic atomic group.

In formula (ix), A³ and A⁴ each independently represent -S- or -NR⁶²- or -NR⁶³-. R⁶² and R⁶³ each independently represent a substituted or unsubstituted alkyl group or a substituted or unsubstituted aryl group. L⁴ represents a nonmetallic atomic group which, together with A³ and the carbon atom adjacent thereto, forms a basic nucleus of a dye. L⁵ represents a nonmetallic atomic group which, together with A⁴ and the carbon atom adjacent thereto, forms a basic nucleus of a dye. R⁶⁰ and R⁶¹ each independently represent a hydrogen atom or a monovalent nonmetallic atomic group, or R⁶⁰ and R⁶¹ are bound to each other to form an aliphatic or aromatic cycle.

In formula (x), R⁶⁶ represents an optionally substituted aromatic cycle or heterocycle, A⁵ represents an oxygen atom, a sulfur atom, or-NR⁶⁷-. R⁶⁴, R⁶⁵, and R⁶⁷ each independently represent a hydrogen atom or a monovalent nonmetallic atomic group. R⁶⁷ and R⁶⁴ may be bonded to each other to form an aliphatic or aromatic ring. R⁶⁵ and R⁶⁷ may be bonded to each other to form an aliphatic or aromatic ring.

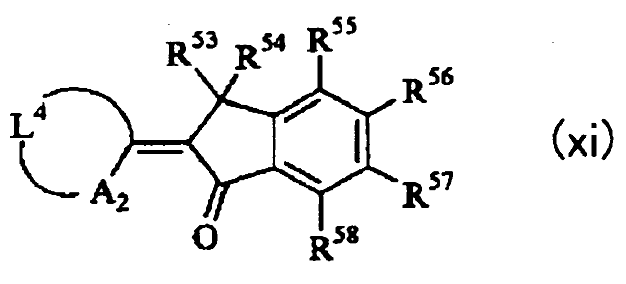

In formula (xi), A₂ represents a sulfur atom or an NR⁵⁹, L⁴ represents a nonmetallic atomic group which, together with A₂ and the carbon atom adjacent thereto, forms a basic nucleus of a dye, R⁵³, R⁵⁴, R⁵⁵, R⁵⁶, R⁵⁷ and R⁵⁸ each independently represents a monovalent nonmetallic atomic group, and R⁵⁹ represents an alkyl group or an aryl group.

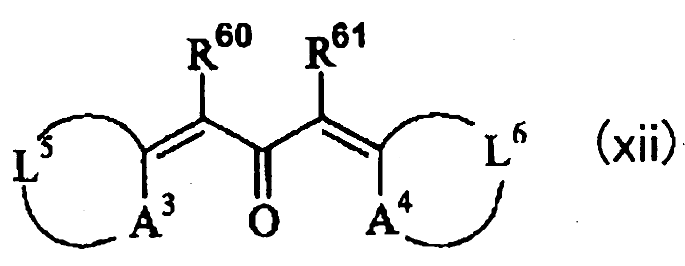

In formula (xii), A³ and A⁴ each independently represent -S-, -NR⁶²-, or -NR⁶³-, R⁶² and R⁶³ each independently represent a substituted or unsubstituted alkyl group, or a substituted or unsubstituted aryl group, L⁵ represents a nonmetallic atomic group which, together with A³ and the carbon atom adjacent thereto, forms a basic nucleus of a dye and L⁶ represents a nonmetallic atomic group which, together with A⁴ and the carbon atom adjacent thereto, forms a basic nucleus of a dye, and R⁶⁰ and R⁶¹ each independently represent a hydrogen atom or a monovalent nonmetallic atomic group, or R⁶⁰ and R⁶¹ may be bonded to each other to form an aliphatic or an aromatic ring.

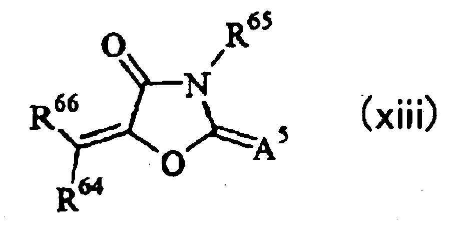

In formula (xiii), R⁶⁶ represents an aromatic ring or a hetero ring optionally having a substituent, and A⁵ represents an oxygen atom, a sulfur atom, or an -NR⁶⁷-. R⁶⁴, R⁶⁵, and R⁶⁷ each independently represent a hydrogen atom or a monovalent nonmetallic atomic group, R⁶⁷ and R⁶⁴ may be bonded to each other respectively to form an aliphatic or an aromatic ring, and R⁶⁵ and R⁶⁷ may be bonded to each other to form an aliphatic or an aromatic ring.

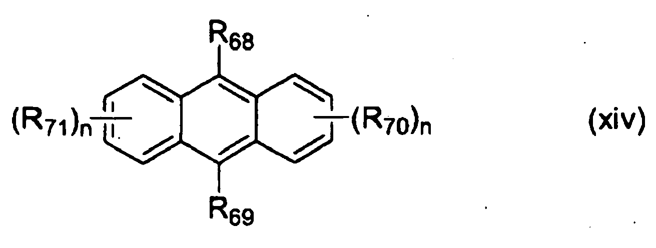

In formula (xiv), R₆₈ and R₆₉ each independently represents a hydrogen atom or a monovalent nonmetallic atomic group. R₇₀ and R₇₁ each independently represents a hydrogen atom or a monovalent nonmetallic atomic group, and n is an integer of 0 to 4. When n is 2 or more, R₇₀ and R₇₁ may be bonded to each other to form an aliphatic or an aromatic ring.

Preferable examples of compounds represented by any one of formulae (vi) to (xiv) include (C-1) to (C-23) shown below, but the invention is not limited to these examples alone.

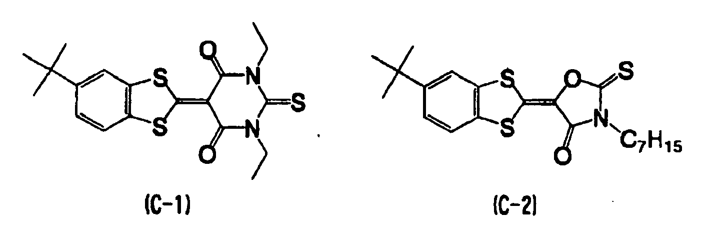

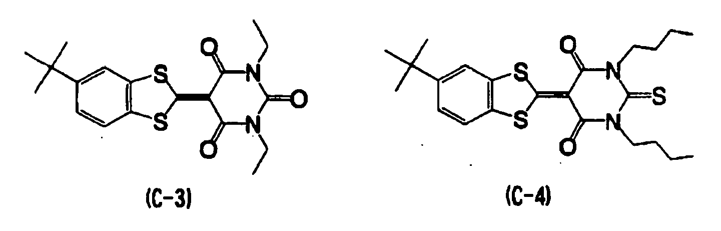

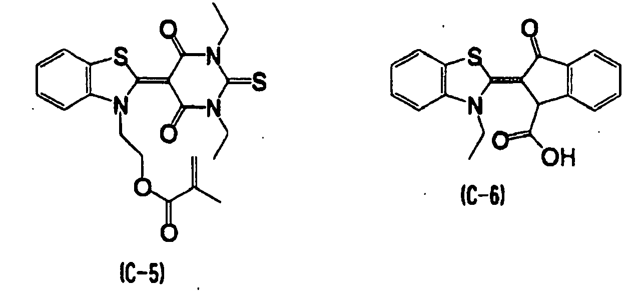

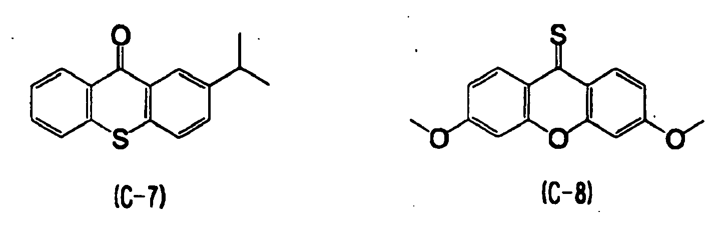

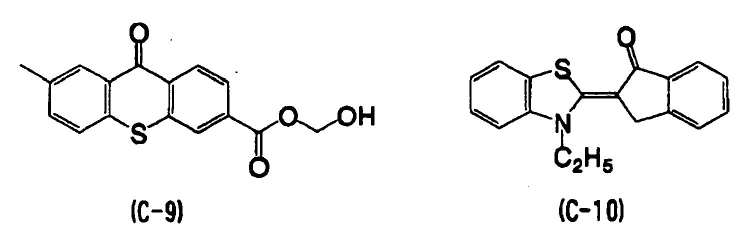

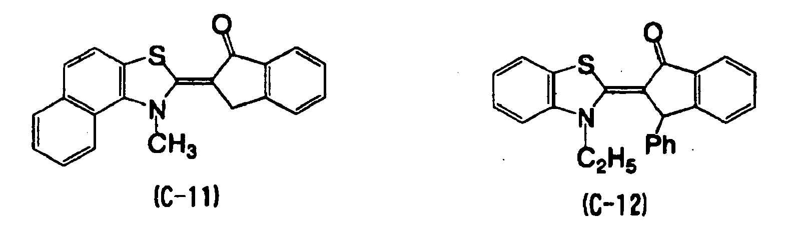

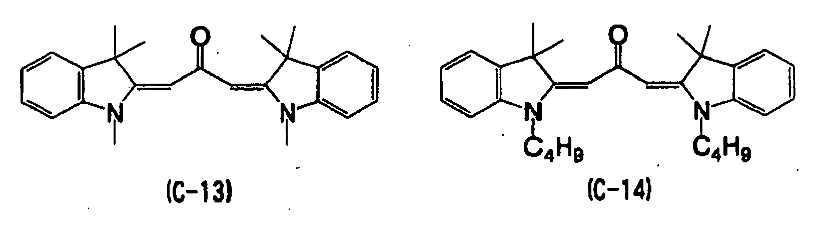

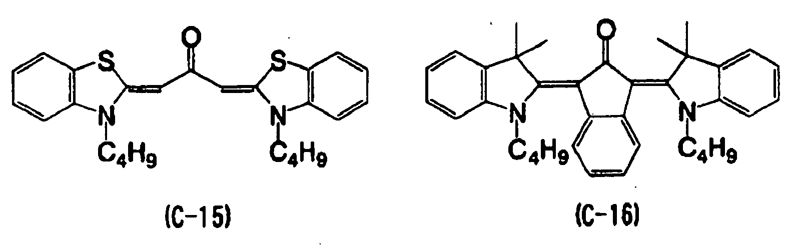

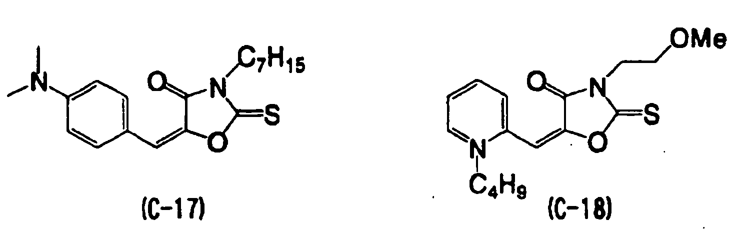

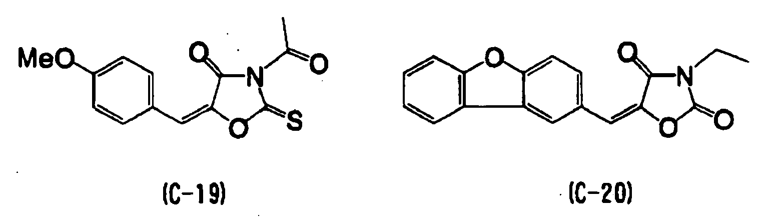

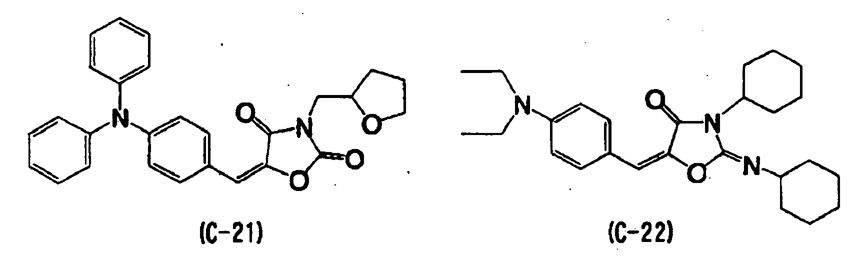

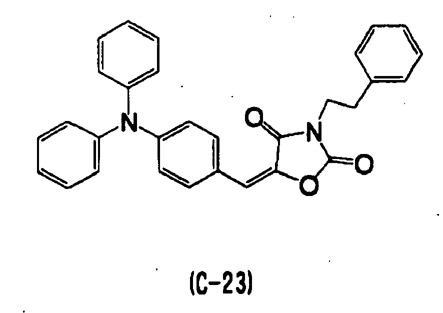

In the ink composition of the invention, the content amount of the sensitizer (c) is preferably 0.01 to 20 mass% relative to the total solid amount of the ink composition from the viewpoint of coloring performance of ink, more preferably 0.1 to 15 mass%, and further preferably 0.5 to 10 mass%.

Sensitizer (c) may be used either alone or in combination of two or more kinds.

The content amount ratio of a sensitizer (c) and the specific polymerization initiator (a) is preferably a/c is 100 to 0.5 by weight, from the viewpoint of improvement in decomposition rate of the polymerization initiator and transmittance of an emitted light, more preferably a/c is 50 to 1 by weight, and further preferably a/c is 10 to 1.5 by weight.

In the invention, an anthracene compound is particularly preferable as a sensitizer. The anthracene compound may be, for example, an anthracene which may have a substituent.

When the anthracene has a substituent, examples of the substituent include an alkyl group, an alkoxy group, and an aryloxy group, and in particular an alkoxy group having 1 to 4 carbon atoms is preferable. The number of substituents of anthracene is preferably 1 to 4, or more preferably 1 to 2. When the anthracene is a monosubstituted anthracene, the position of the substituent is preferable to be position 9, and when the anthracene is a disubstituted anthracene, the positions of the substituents are preferable to be positions 9 and 10. In particular, 9, 10-substituted anthracene compound having two substituents at positions 9 and 10 is preferable.

Specific examples of anthracene compound are given below, but the invention is not limited to these examples alone.

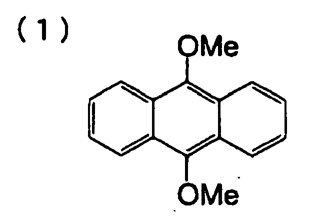

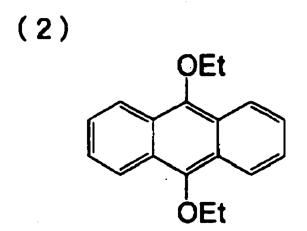

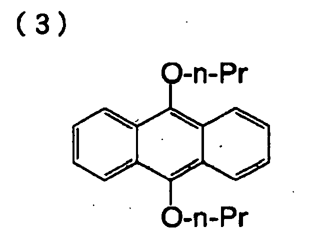

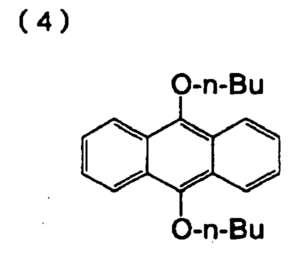

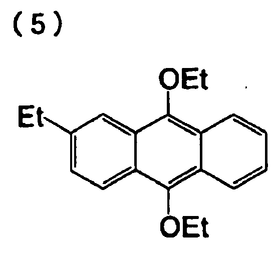

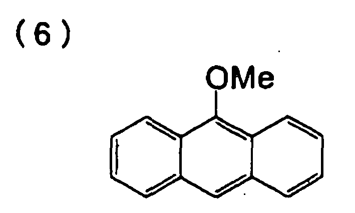

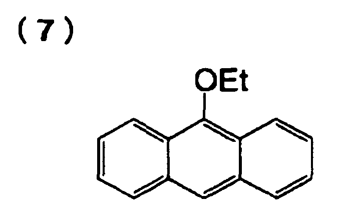

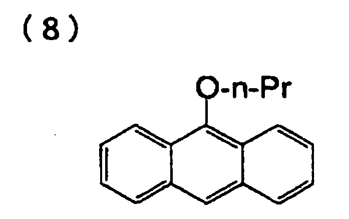

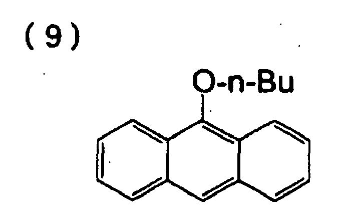

The amount of the anthracene compound is preferably 20 to 100 mass% relative the photopolymerization initiator, more preferably 30 to 80 mass% relative the photopolymerization initiator, and further preferably 40 to 70 mass% relative the photopolymerization initiator.

### Surface active agent

The ink composition of the invention preferably contains a known surface active agent. Examples of the known surface active agent include those disclosed, for example, in JP-ANos. 62-173463 and 62-183457. Specific examples include an anionic surface active agents such as dialkyl sulfosuccinates, alkyl naphthalene sulfonates, and aliphatic acid salts, nonionic surface active agents such as polyoxyethylene alkylethers, polyoxyethylene alkylallyl ethers, acetylene glycols, polyoxyeethylene-polyoxypropylene block copolymers, and cationic surface active agents such as alkylamine salts, quaternary ammonium salts. Instead of known surface active agents, organic fluoro compounds may be used. The organic fluoro compounds are preferable to be hydrophobic. Examples of the organic fluoro compounds include fluorine surface active agents, oily fluorine compounds (e.g., fluorine oil), and solid-state fluorine compound resin (e.g., ethylene tetrafluoride resin), such as those disclosed in Japanese Patent Application Publication Laid-Open (JP-B) No. 57-9053 (columns 8 to 17) and JP-A No. 62-135826.

### Additives

The ink composition of the invention may include various additives as needed in addition to essential components. These optional components are described below.

### Cosensitizer

To the ink composition of the invention, a known compound that has a function of further improving the sensitivity or suppressing the inhibition of polymerization by oxygen may be added as a cosensitizer.

Examples of the cosensitizer include the amines described, for example, in M. R, Sander et al., "Journal of Polymer Society" 10, p. 3173, (1972), JP-B No. 44-20189, JP-A Nos. 51-82102, 52-134692, 59-138205, 60-84305, 62-18537, and 64-33104 and Research Disclosure 33825; and specific examples thereof include triethanolamine, ethyl p-dimethylaminobenzoate, p-formyldimethylaniline, and p-methylthiodimethylaniline.

Other examples of the cosensitizer include thiols and sulfides, for example, the thiol compounds described in JP-A No. 53-702, JP-B No. 55-500806, and JP-A No. 5-142772, and the disulfide compounds described in JP-A No. 56-75643; and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g., N-phenylglycine), the organic metal compounds described in JP-B No. 48-42965 (e.g., tributyltin acetate), the hydrogen donors described in JP-B No. SS-34414, the sulfur compounds described in JP-A No. 6-308727 (e.g., trithiane), the phosphorus compounds described in JP-A No. 6-250387 (e.g., diethyl phosphite), and the Si-H and Ge-H compounds described in Japanese Patent Application No. 6-191605.

The amount of the cosensitizer may be properly selected, generally about 0.01 to 10 mass% relative to the total amount (total mass) of the ink composition.

### Polymerization inhibitor

The ink composition of the invention may contain at least one polymerization inhibitor.

The polymerization inhibitor may be properly selected from a group consisting of phenole compounds containing a hydroxyl group, quinones, N-oxide compounds, piperidine-1-oxyl free radical compounds, pyrrolidine-1-oxyl free radical compounds, N-nitrosophenyl hydroxylamines, and cationic dyes.

### Ultraviolet ray absorber

The ink composition of the invention may contain an ultraviolet ray absorber from the viewpoint of enhancement of weather resistance of obtained image and prevention of fading.

Examples of the ultraviolet ray absorber include benzotriazole-based compounds disclosed in JP-A Nos. 58-185677, 61-190537, 2-782, 5-197075, 9-34057 and the like, benzophenone compounds disclosed in JP-A Nos. 46-2784 and 5-194483, USP No. 3214463, and the like, cinnamic acid compounds disclosed in JP-B Nos. 48-30492 and 56-21141, JP-A No. 10-88106 and the like, triazine compounds disclosed in JP-A Nos. 4-298503, 8-53427, 8-239368 and 10-182621, Japanese Patent Application National Publication (Laid-Open) No. 8-501291 and the like, compounds disclosed in Research Disclosure No. 24239, compounds emitting fluorescence by absorbing ultraviolet ray represented by stilbene-based compound, benzoxazole-based compound, and other so-called fluorescence intensifier.

The amount of the ultraviolet ray absorber may be properly selected, generally 0.01 to 10 mass% relative to the total amount (total mass) of the ink composition.

### Antioxidant

The ink composition of the invention may contain an antioxidant for enhancing the stability. Examples of antioxidant include those disclosed in European Patent Publication Nos. 223739, 309401, 309402, 310551, 310552, and 459416, German Patent Publication No. 3435443, JP-ANos. 54-48535, 62-262047, 63-113536, 63-163351, 2-262654, 2-71262, 3-121449, 5-61166, and 5-119449, and USP Nos. 4814262 and 4980275.

The amount of the antioxidant may be properly selected, generally 0.01 to 10 mass% relative to the total amount (total mass) of the ink composition.

### Anti-fading agent

The ink composition of the invention may contain an anti-fading agent of various organic systems or metal complex system. Examples of organic anti-fading agent include hydroquinones, alkoxy phenols, dialkoxy phenols, phenols, anilines, amines, indanes, chromanes, alkoxy anilines, and hetero rings. Examples of metal complex anti-fading agent include a nickel complex and a zinc complex, and specific examples include compounds disclosed in the patents cited in Research Disclosure No. 17643, items I to J of VII, No. 15162, No. 18716, left column of page 650, No. 36544, page 527, No. 307105, page 872, No. 15162, and compounds represented by formulae and compounds in examples disclosed in pages 127 to 137 of JP-A No. 62-215272.

The amount of the anti-fading agent may be properly selected, generally about 0.01 to 10 mass% to relative the total amount (total mass) of the ink composition.

### Conductive salts

The ink composition of the invention may contain a conductive salt, such as a potassium thiocyanate, lithium nitrate, ammonium thiocyanate, or dimethylamine hydrochloride, for the purpose of control of ejection properties.

### Solvent

The ink composition of the invention may contain trace amount of organic solvent in order to improve adhesion with the recording medium.

Examples of solvent include ketone-based solvents such as acetone, methyl ethyl ketone, and diethyl ketone; alcohol-based solvents such as methanol, ethanol, 2-propanol, 1-propanol, 1-butanol, and tert-butanol; chlorine-based solvents such as chloroform, and methylene chloride; aromatic solvents such as benzene and toluene; ester-based solvents such as ethyl acetate, butyl acetate, and isopropyl acetate; ether-based solvents such as diethyl ether, tetrahydrofuran, and dioxan; and glycol ether-based solvents such as ethylene glycol monomethyl ether, and an ethylene glycol dimethyl ether.

The solvent may be added in a range not inducing problems of solvent resistance or VOC, and the amount is preferably 0.1 to 5 mass%, and more preferably 0.1 to 3 mass%, relative to the total amount of ink composition.

### High molecular weight compound

The ink composition of the invention may contain various high molecular compounds in order to adjust the film properties. Examples of high molecular weight compound include acrylic polymers, polyvinyl butyral resins, polyurethane resins, polyamide resins, polyester resins, epoxy resins, phenol resins, polycarbonate resins, polyvinyl butyral resins, polyvinyl formal resins, shellac, vinyl-based resins, acrylic resins, rubber-based resins, waxes and other natural resins. Two or more kinds may be used in combination. Among these, particularly preferable is a vinyl-based copolymer obtained by copolymerization of an acrylic monomer. As the copolymer composition of high molecular binding materials, a copolymer containing a structural unit, such as a "monomer containing a carboxyl group", an "alkyl methacrylate", or an "alkyl acrylate" may be preferably used.

Besides, the ink composition of the invention may contain other additives as needed, for example, leveling additives, mat agents, waxes for adjusting the film properties, or tackifiers for improving adhesion to the recording medium such as a polyolefin or PET, which does not prevent polymerization.

Examples of the tackifier include tacky polymers of high molecular weight disclosed in pages 5 and 6 of JP-A No. 2001-49200 (e.g., a copolymer composed of an ester of (meth)acrylic acid and an alcohol having alkyl group of 1 to 20 carbon atoms, an ester of (meth)acrylic acid and an alicyclic alcohol of 3 to 14 carbon atoms, and an ester of (meth)acrylic acid and an aromatic alcohol of 6 to 14 carbon atoms), and a tackifying resin of low molecular weight a having polymerizable unsaturated bond.

### Preferable Physical Properties of Ink Composition

When the ink composition according to the invention is used for ink jet recording, considering the ejection efficiency, the ink composition according to the invention preferably has an ink viscosity of 5 to 30 mPa·s, more preferably7 to 20 mPa·s, at the temperature at the time of ejection. It is preferable to adjust and determine the composition properly so that the viscosity falls in the range.

The viscosity at room temperature (25 to 30°C) of the ink composition is preferably 7 to 120 mPa·s, more preferably 10 to 80 mPa·s. By increasing the viscosity at room temperature, it becomes possible to prevent penetration of the ink into the recording medium even when a porous recording medium is used, to reduce the amount of uncured monomer and the odor, to suppress bleeding upon the deposition of ink droplets, and consequently to improve the image quality.

The surface tension of the ink composition according to the invention is preferably 20 to 40 mN/m and more preferably 20 to 30 mN/m. When the ink is used for recording on various recording media such as polyolefin, PET, coated paper, and non-coated paper, the surface tension is preferably 20 mN/m or more in view of the prevention of bleeding and penetration, and 30 mN/m or less in view of the wettability.

The ink composition of the invention is preferably used in inkjet recording. The inkjet recording method is not particularly specified, and the inkjet recording method may be, for example, a charge control method that includes ejecting ink by utilizing an electrostatic inductive force, a drop-on-demand method (pressure pulse method) utilizing vibration pressure of piezo elements, an acoustic inkjet method that includes converting an electric signal into an acoustic beam and irradiating the ink with the beam to eject the ink by utilizing radiation pressure, and a thermal inkjet method that includes heating the ink, forming foams, and utilizing the generated pressure. The inkjet recording methods also include a method of ejecting multiple ink droplets of low concentration, called photo ink, in small volume, a method of using plural types of ink substantially the same in hue but different in concentration, thereby improving the image quality, and a method of using colorless and transparent ink.

The ink composition of the present invention is preferably used for an ink jet recording ink used in the drop-on-demand inkjet recording method (pressure pulse method) utilizing piezo elements.

### Image forming method and its recorded material

The ink composition of the invention may be applied to an image forming method including forming an image on a recording material by inkjet recording involving ejection of the ink composition, or an image forming method including forming an image on a recording material using the ink composition of the invention, and curing the image by irradiation with an active energy ray (active ray) of the image formed on the recording material by the image forming.

That is, the image forming method of the invention may be either a method including only forming an image by inkjet recording, or a method further including curing the image. Further, the image forming method may be a method including forming an image by a method other than inkjet recording and then curing the image.

In the image curing process of the invention, active energy rays can be utilized. After an image forming process in which an image is formed on the recording material, the formed image is irradiated with active energy ray, whereby polymerization and curing of the polymerizable compound that contributes to imaging take place, and a cured and tough image can be formed favorably.

In the image curing process, exposure for promoting polymerization and curing can be carried out by, for example, using a light source for emitting an active energy ray in a wavelength region corresponding to the sensible wavelength of the ink composition. The light source, exposure time and amount of light can be selected appropriately depending on the degree of polymerization and curing of the polymerizable compound of the invention.

The thickness of the image cured in the image curing process is preferably 2 to 30 µm. The thickness of the image is the thickness of the cured matter of the image formed from the ink composition. Since the thickness of the image is in a range of 2 to 30 µm, images from a low concentration to a high concentration can be expressed.

In the image curing process, exposure for promoting polymerization and curing can be carried out by using a light source for emitting an active energy ray in a wavelength region corresponding to the sensible wavelength of the ink composition. Specifically, a light source emitting an active ray in a wavelength region of 250 to 450 nm, and preferably 365 ± 20 nm is used, for example, an LD, an LED (light emitting diode), a fluorescent lamp, a low pressure mercury lamp, a high pressure mercury lamp, a metal halide lamp, a carbon arc lamp, a xenon lamp, or a chemical lamp. Preferred examples of the light source include an LED, a high pressure mercury lamp, and a metal halide lamp.

When curing by radical polymerization, since polymerization is disturbed by oxygen, it is possible to cure at low energy by exposure in a low oxygen concentration environment, that is, in a nitrogen or other gas atmosphere.

In one embodiment, the recorded material obtained by using the ink composition of the invention has an image area cured by irradiation with radiation such as an ultraviolet ray, and the strength of the image area is excellent, and thus it can be used as an ink receiving layer (image area) of a planographic printing plate.

In the image forming process, it is preferred to apply an inkjet recording method by using an inkjet printer. Specifically, in the image forming process, it is preferred to form an image by inkjet recording involving ejection of the ink composition.

### Inkjet recording method and inkjet recording apparatus

The inkjet recording method and the inkjet recording apparatus which may be preferably applied in the image forming method of the invention are described below.

### System

An example of the inkjet recording system of ejecting ink is disclosed in JP-A No. 2002-11860, but the invention is not limited to this example alone.

### Ink holding means

As an ink holding means, a known ink cartridge is preferably used to contain ink. As disclosed in JP-A No. 5-16377, ink may be contained in a deformable container used as a tank. As disclosed in JP-ANo. 5-16382, when a sub-tank is used, the ink can be supplied to the head more stably. As disclosed in JP-ANo. 8-174860, a cartridge may be designed to supply ink by move of a valve when the pressure is lowered in the ink supply chamber. In these ink holding means, as negative pressure applying methods for keeping an appropriate meniscus in the head, following methods may be used. That is, a method by utilizing height of ink holding means, i.e. water head pressure, a method by utilizing capillary pressure of a filter provided in the ink passage, a pressure control method by using a pump or the like, and a method of applying a negative pressure by capillary pressure by holding the ink in an ink absorber as disclosed in JP-ANo. 50-74341, and the like.

### Ink supply route

A method of supplying the ink from the ink holding means to the head may be a method of connecting the holding means directly to the head unit, or a method of connecting by a flow passage such as a tube. The ink holding means and the passage are preferred to be made of materials having a favorable wettability to ink, or surface-treated materials.

### Head

An ink droplet ejecting method may be, for example, a method of ejecting ink droplets continuously and deflecting the droplets depending on the image so as to deposit or not to deposit the ink droplets on the recording material, by a selective control method, as disclosed in JP-A No. 5-104725; or a so called on-demand method of ejecting ink droplets only on an area necessary for an image. The on-demand method may be a method in which the ink is ejected by ink pressure generated by deformation of a structural member by using piezoelectric elements or the like, as disclosed in JP-ANo. 5-16349. Further, the ink droplet ejecting method may be, for example, a method in which the ink is ejected by pressure generated by expansion due to vaporization by thermal energy as disclosed in JP-A No. 1-234255 or a method in which ink ejection to the recording material is controlled by an electric field as disclosed in JP-A No. 2001-277466.

In the inkjet recording method, an image is recorded on a recording material by using an ink composition of the invention. The ink ejecting nozzles used in the method are not particularly specified, and may be properly selected depending on the purpose. Nozzles disclosed, for example, in JP-A No. 5-31908 may be used. To eject inks of plural colors, for example, as disclosed in JP-A No. 2002-316420, plural nozzles may be disposed in plural columns, and then color images can be formed at high speed. When plural head units each having plural nozzle columns are disposed, a higher speed may be realized.

When nozzles are disposed, as disclosed in JP-A No. 63-160849, in a width the same or greater than the width of the image to form so-called line head, and by moving the recording material simultaneously with ink dropping from these nozzles, images can be formed at high speed.

When the surface of nozzles is treated as disclosed in JP-ANo. 5-116327, splashing of ink droplets on nozzle surface and adhesion of ink droplets can be prevented.

Even by such treatment, the nozzle may be stained, and in such a case the ink stains can be cleaned by using blades as disclosed in JP-A No. 6-71904.

Ink compositions of various colors are not always ejected uniformly from the nozzles, and a specific ink may not be ejected for a long time. To maintain the meniscus stably in such a case, as disclosed in JP-A No. 11-157102, the ink may be ejected properly outside the image region, and a fresh ink is supplied in the head, so that physical properties of the ink may be maintained at specified values.

In spite of these measures, foams may invade into the head or may be generated in the head. In such a case, as disclosed in JP-A No. 11-334092, by sucking the ink by force from out of the head, the degenerated ink may be discarded, and foams can be forced out of the head at the same time. If the nozzles are kept without being used for dropping for a long time, as disclosed in JP-ANo. 11-138830, the nozzle surface can be covered with a cap, and thus the nozzle surface can be protected.

In spite of these measures, the nozzles may fail to eject the ink. If an image is printed while part of the nozzles does not eject, problems such as an uneven image may be caused. To avoid such problems, it is effective to detect failure of ejection to take proper measures as disclosed in JP-A No. 2000-343686.

When the head unit is moved mechanically as disclosed in JP-ANo. 6-115099, and the ink dropping is carried out in a overlapping manner by moving the recording material synchronously in the orthogonal direction intermittently, unevenness of the image due to defective precision of intermittent move of the recording material may be concealed, and a high image quality may be realized. At this time, by properly setting the relation of the head moving speed, moving distance of recording material, and number of nozzles, the relation of image quality and recording speed can be determined in a favorable relation.

To the contrary, the same effects may be obtained by fixing the head, and moving the recording material mechanically in a specified direction reciprocally, and moving intermittently in orthogonal direction.

### Temperature control

The inkjet recording apparatus is preferred to be provided with a means for stabilizing ink composition temperature, and temperature may be controlled in all piping systems and members from the ink tank (including an intermediate tank if any) to the nozzle ejection surface.

In an embodiment of the inkjet recording method, the ink composition is heated to 40 to 80°C, and the viscosity of ink composition is lowered to 30 mPa·s or less, and preferably 20 mPa·s or less, and then the ink is ejected. By this method a high ejection stability is realized. Generally, in the radiation curing type ink composition, since the viscosity is higher than that of water-based ink, the viscosity fluctuation margin is larger due to temperature changes in printing operation. The viscosity fluctuation margin of the ink composition may have direct effects on the droplet size and droplet ejection speed, thereby deteriorating the image quality, and hence it is preferable to keep constant temperature of ink composition during printing. Accordingly, the apparatus preferably has an ink temperature detecting means, an ink heating means, and a means for controlling heating depending on the detected ink temperature.

The temperature control method is not particularly specified, and it is preferred to use, for example, temperature sensors at plural positions on the piping so as to control heating depending on the flow rate of the ink composition and ambient temperature. The head unit to be heated is preferred to be insulated thermally so as not to receive temperature effects from the atmosphere. To shorten the printer start-up time required for heating, or to decrease loss of thermal energy, it is preferable to insulate from other parts, or reduce the thermal capacity of the entire heating unit.

It is also preferred to have a means for controlling the printing energy applied to the means for ejecting the ink depending on the ink temperature.

The control margin of ink composition temperature is preferably a set temperature ± 5°C, more preferably a set temperature ± 2°C, and still more preferably a set pressure ± 1°C.

### Exposure

The light source may be, for example, a general mercury lamp, a metal halide lamp, a light emitting diode, a semiconductor laser, or a fluorescent lamp. Other examples of the light source include light sources, electromagnetic waves and the like that can be used for promoting ink polymerization reaction, such as a hot cathode tube, a cold cathode tube, electron ray, X-ray.

When a metal halide lamp is used, a lamp of 10 to 1000 W/cm is preferred, and the intensity of illumination on the surface of the recording material is preferred to be 1 mW/cm² to 100 W/cm².

When a high pressure mercury lamp or a metal halide lamp is used, ozone is generated along with progress of electric discharge. Accordingly, it is preferred to have an exhaust means. The exhaust means is preferably disposed to also function to collect the ink mist generated during ink ejection.

Preferred irradiation conditions of active energy ray are described.

A basic method of irradiation is disclosed in JP-A No. 60-132767. Specifically, light sources are installed at both sides of the head unit, and the head and light sources are scanned by shuttle system. Light is emitted in a specific time after the deposition of ink droplets. Further, curing is completed by another light source without drive. WO99/5441 discloses an irradiation method using an optical fiber, and a method in which a collimated light source is set up at the mirror face of the side of a head unit, and UV light is emitted to the recording unit. These methods of irradiation are also applicable in the invention.

When the ink ejection nozzle is irradiated with the active energy light for curing, the ink mist sticking to the nozzle surface is solidified, and ink ejection may be disturbed, and hence it is preferable to take measures for light shielding in order to minimize the irradiation to the nozzle. Specifically, it is preferable to take measures such as providing a partition wall for preventing irradiation to nozzle plate, or providing a means for limiting the incident angle to the recording material for reducing the stray light.

In the invention, the time from ink deposition to start of irradiation with radiation is preferably 0.01 to 0.5 second. Irradiation with radiation is more preferably after 0.01 to 0.3 second of the ink deposition, and still more preferably after 0.01 to 0.15 second of the ink deposition. By thus controlling the time from ink deposition to start of irradiation to a shortest time, it is effective to prevent bleeding of the deposited ink before curing. When using a porous recording medium, exposure can be started before the ink composition permeates into deeper parts out of reach of light source, and residual unreacted monomer can be suppressed, and odor can be reduced as a result. When the inkjet recording method of the invention is combined with the ink composition of the invention, it is possible to obtain an outstanding synergistic effect. By such recording method, the dot diameter of applied ink droplets can be kept constant even on various recording media different in surface wettability, and the image quality is enhanced.

### System parameters

When forming an image, the ink depositing diameter on the recording material is preferred to be in a range of 10 to 500 µm, and hence at the time of ejection, the diameter of ink droplets is preferred to be in a range of 5 to 250 µm, and therefore the nozzle diameter is preferred to be 15 to 100 µm.

To form an image, the number of pixels per 1 inch is preferred to be 50 to 2400 dpi, and hence the nozzle density of the head is preferred to be 10 to 2400 dpi. If the nozzle density of the head is low, by inclining the head to the conveying direction of recording material, or disposing a plurality of head units by deviating relatively, high density ink deposition can be realized by using a head of a wide nozzle interval. Alternatively, by reciprocal moving of the head or recording material, the recording material is conveyed by a specified extent every time the head is moved at low nozzle pitch, and ink droplets are deposited to different positions, so that image recording of high density may be realized.

The amount of ink droplet ejection on recording material is preferably controlled between 0.05 and 25 g/m² in order to express favorable gradation, and in order to realize this range, it is preferable to control the size of ink droplets ejected from the head and the quantity.

If the spacing between the head and the recording material is too wide, flight of ink droplets may be disturbed by air flow due to move of the recording material and thus the deposition position precision may be lowered. If too narrow, the head and the recording material may contact with each other due to undulations of the recording material surface, or vibration caused by conveying mechanism or the like. Therefore it is preferred to maintain at about 0.5 to 2 mm.

### Ink set

The ink may be either a single color, or multiple colors including cyan, magenta, and yellow, or four colors by adding black, or another special color may be added. The coloring material may be either a dye or a pigment. The ink droplet ejection sequence of color inks may be either ascending order or descending order of brightness of color, and the sequence may be determined in consideration of favorable image recording quality.

When overlaying from the color having a higher value of the brightness of color, the active energy ray is likely to reach the lower ink easily, and it is effective to prevent interference of curing sensitivity, increase of residual monomer, occurrence of odor, and deterioration of adhesion. All colors may be ejected and then exposed at once, but exposure of one color each is preferred for promoting the curing property.

The image signal to be recorded is preferred to be processed so as to obtain a favorable color reproduction as disclosed in JP-A No. 6-210905.

### Recording material

The recording medium to be recorded by using the ink composition of the invention may be an ink permeable recording medium or an ink impermeable recording medium.

Examples of the ink permeable recording medium include plain paper, inkjet paper, coated paper, electrophotographic paper, cloth, nonwoven cloth, porous membrane, and polymer absorber. Such examples are mentioned as recording materials in, for example, JP-A No. 2001-1891549.

Examples of the ink impermeable recording medium include art paper, synthetic resin, rubber, resin coated paper, glass, metal, ceramics, and wood. Further, to add various functions, a plurality of these materials may be combined and compounded and used as a base material.

Any synthetic resin may be used, and examples thereof include polyesters such as polyethylene terephthalate, and polybutadiene terephthalate; polyolefins such as polyvinyl chloride, polystyrene, polyethylene, polyurethane, and polypropylene; and acrylic resin, polycarbonate, and acrylonitrile-butadiene-styerne copolymer, diacetate, triacetate, polyimide, cellophane, and celluloid.

The shape (thickness) of the base material made of such synthetic resin may be a film, a card, or a block, and is not particularly specified, and any shape may be selected according to the purpose. These synthetic resins may be either transparent or opaque. As a form of use of synthetic resins, for example, it is preferred to be used as a film as used in soft packages, and various non-absorbing plastics and films may be used. Examples of plastic films include PET film, OPS film, OPP film, ONy film, PVC film, PE film, and TAC film.

Examples of the resin coated paper include a transparent polyester film, an opaque polyester film, an opaque polyolefin resin film, and a paper support member having both sides of paper laminated with polyolefin resin, and in particular the paper support member having both sides of paper laminated with polyolefin resin is preferred.

As described herein, by image recording using the ink composition of the invention, it is possible to obtain an image of high sensitivity and excellent in curing property, and it is also possible to obtain a recorded material, that is the recorded material of the invention, which is excellent in curing property and may exhibit sufficient scratch resistance.

All publications, patent applications, and technical standards mentioned in this specification are herein incorporated by reference to the same extent as if each individual publication, patent application, or technical standard was specifically and individually indicated to be incorporated by reference.

### EXAMPLES

The invention is described while referring to examples, but the invention is not limited to these examples alone. In these examples, the ink for inkjet recording is used as an example of the ink composition.

### <Preparation of pigment dispersion>

Pigments and dispersants shown in Table 1 were put in a ball mill, and dispersed for 20 minutes by using zirconia beads having a diameter of 0.5 mm, and thus the pigment dispersions were obtained. The average particle diameter of each of the pigment dispersions was measured by using a transmission electron microscope (TEM). Results are shown in Table 1.

**Table 1**

| | Cyan pigment dispersion (1) | Cyan pigment dispersion (2) | Magenta pigment dispersion | Yellow pigment dispersion | Black pigment dispersion |
|---|---|---|---|---|---|
| Pigment | | | | | |
| IRGALITE BLUE GLVO (PB-15;4, manufactured by Ciba Specialty Chemicals, Ltd.) | 30 | 30 | - | - | - |
| CINQUASIA RT-355D (PV-19/RP-202, manufactured by Ciba Specialty Chemicals, Ltd.) | - | - | 30 | - | - |
| NOVOPERM YELLOW P-HG (PR-180, manufactured by Clariant Co.) | - | - | - | 30 | - |
| PRINTEX 35 (carbon black, manufactured by Degussa) | - | - | - | - | 30 |
| OXT-221 (cation-polymerizable compound, manufactured by Toagosei Co., Ltd.) | 30 | - | 64 | 61 | 40 |
| Diethyl phthalate (solvent) | - | 30 | - | - | - |

| Dispersant | | | | | |
|---|---|---|---|---|---|
| BYK 168, manufactured by BYK-Chemie | 40 | 40 | - | - | - |
| Graft polymer 1 | - | - | 6 | - | - |
| Graft polymer 2 | - | - | - | 9 | - |
| SOLSPERSE 32000 (Lubrizol) | - | - | - | - | 30 |
| Average particle diameter (nm) | 92 | 88 | 155 | 160 | 76 |

In Table 1, graft polymer 1 is obtained from synthesis example 1 below, and graft polymer 2 is obtained from synthesis example 2 below.

### (Synthesis example 1)

### (Synthesis of monomer 1)

9.76 parts of 9 (10H) acridone and t-butoxy potassium were dissolved in 30 parts of dimethyl sulfoxide, and heated to 45°C. 15.26 parts of chloromethyl styrene was added dropwise, and the mixture was heated and stirred for 5 hours at 50°C. This reaction solution was stirred and poured into 200 parts of distilled water, and the obtained precipitate was filtered and washed, and 11.9 parts of monomer 1 was obtained.

### (Synthesis of graft polymer 1)

15 parts by mass of methyl ethyl ketone was poured into a three-opening flask purged with nitrogen, and stirred by a stirrer (trade name: Three-One Motor, manufactured by Shinto Scientific Co., Ltd.), and nitrogen was introduced into the flask, which was heated to 78°C. The monomer solution and the initiator solution described below were added dropwise simultaneously in 2 hours. After the dropwise adding, 0.08 parts by mass of V-65 specified below was added, heated to 78°C and stirred for 3 hours. The obtained reaction solution was stirred and poured into 1000 parts of hexane, the produced precipitate was heated and dried, and thus graft polymer 1 was obtained.

### (Monomer solution)

- Monomer 1 3.0 parts by mass
- Polymethyl methacrylate having a methacryloyl group at its terminal (number-average molecular weight 6000, trade name: AA-6, manufactured by Toagosei Co., Ltd.) 21.0 parts by mass
- 3-(N,N-dimethylaminopropyl acrylamide) 6.0 parts by mass
- Methyl ethyl ketone 45 parts by mass

### (Initiator solution)

- 2,2-azobis (2,4-dimethyl valeronitrile) (trade name: V-65, manufactured by Wako Pure Chemicals Ltd.) 0.04 parts by mass
- Methyl ethyl ketone 9.6 parts by mass

### (Synthesis example 2)

Graft polymer 2 was obtained in the same procedure as in synthesis example 1, except that the polymethyl methacrylate having a methacryloyl group at its terminal used in synthesis example 1 was changed to a methoxy polyethylene glycol methacrylate (trade name: NK Ester -230G, manufactured by Shin Nakamura Chemical Co., Ltd.).

### [Example I-1]

The following components were mixed and stirred, and the mixture was filtered by a membrane filter of 5.0 µm, and thus a cyan ink was obtained.

### <Ink composition components>

Monomer: 3-ethyl-3-(2-ethylhexyloxymethyl) oxethane (trade name: ALONOXETHANE OXT-212, manufactured by Toagosei Co., Ltd.) 40 g
Monomer: 3,4-epoxy cyclohexyl methyl-3,4-epoxy cyclohexyl carboxylate (trade name: CYRACURE UVR-6105, manufactured by Dow Chemical Co.) 30 g
Monomer: bis [1-ethyl (3-oxetanyl)] methyl ether (trade name: ALONOXETHANE OXT-221, manufactured by Toagosei Co., Ltd.) 27 g
Pigment dispersion (cyan pigment dispersion (1) in Table 1) 7 g
Photopolymerization initiator: propylene carbonate solution of triaryl sulfonium salt (trade name: UVI-6992, manufactured by Dow Chemical Co.) 9.0 g

- Sensitizer: 9,10-dibutoxy anthracene 3.0 g
- Surface active agent: BYK307 (trade name, manufactured by BYK-Chemie) 0.1 g

### [Example 1-2]

The following components were mixed and stirred, and the mixture was filtered by a membrane filter of 5.0 µm, and thus a cyan ink was obtained.

### <Ink composition components>

Monomer: 3-ethyl-3-phenoxy oxethane (trade name: ALONOXETHANE OXT-211, manufactured by Toagosei Co., Ltd.) 70 g
Monomer: 3,4-epoxy cyclohexyl methyl-3,4-epoxy cyclohexyl carboxylate (trade name: CYRACURE UVR-6105, manufactured by Dow Chemical Co.) 10 g
Monomer: bis [1-ethyl (3-oxetanyl)] methyl ether (trade name: ALONOXETHANE OXT-221, manufactured by Toagosei Co., Ltd.) 17 g
Pigment dispersion (cyan pigment dispersion (1) in Table 1) 7 g
Photopolymerization initiator: propylene carbonate solution of triaryl sulfonium salt (trade name: UVI-6992, manufactured by Dow Chemical Co.) 9.0 g

- Sensitizer: 9,10-dibutoxy anthracene 3.0 g
- Surface active agent: BYK307 (trade name, manufactured by BYK-Chemie) 0.1 g

### [Example I-3]

A cyan ink was obtained in the same procedure as in example I-1, except that 7g of pigment dispersion (1) was changed to 7g of pigment dispersion (2) shown in the Table 1.

### [Example I-4]

A cyan ink was obtained in the same procedure as in example I-2, except that 7g of pigment dispersion (1) was changed to 7g of pigment dispersion (2) shown in the Table 1.

### [Comparative Example I-1]

The following components were mixed and stirred, and the mixture was filtered by a membrane filter of 5.0 µm, and thus a cyan ink was obtained.

### <Ink composition components>

Monomer: 3-ethyl-3-(2-ethylhexyloxymethyl) oxethane (trade name: ALONOXETHANE OXT-212, manufactured by Toagosei Co., Ltd.) 20 g
Monomer: 3,4-epoxy cyclohexyl methyl-3,4-epoxy cyclohexyl carboxylate (trade name: CYRACURE UVR-6105, manufactured by Dow Chemical Co.) 40 g
Monomer: bis [1-ethyl (3-oxetanyl)] methyl ether (trade name: ALONOXETHANE OXT-221, manufactured by Toagosei Co., Ltd.) 37 g
Pigment dispersion (cyan pigment dispersion (1) in Table 1) 7 g
Photopolymerization initiator: propylene carbonate solution of triaryl sulfonium salt (trade name: UVI-6992, manufactured by Dow Chemical Co.) 9.0 g

- Sensitizer: 9,10-dibutoxy anthracene 3.0 g
- Surface active agent: BYK307 (trade name, manufactured by BYK-Chemie) 0.1 g

### [Comparative Example 1-2]

The following components were mixed and stirred, and the mixture was filtered by a membrane filter of 5.0 µm, and thus a cyan ink was obtained.

### <Ink composition components>

Monomer: 3-ethyl-3-phenoxy oxethane (trade name: ALONOXETHANE OXT-211, manufactured by Toagosei Co., Ltd.) 80 g
Monomer: 3,4-epoxy cyclohexyl methyl-3,4-epoxy cyclohexyl carboxylate (trade name: CYRACURE UVR-6105, manufactured by Dow Chemical Co.) 10 g
Monomer: bis [1-ethyl (3-oxetanyl)] methyl ether (trade name: ALONOXETHANE OXT-221, manufactured by Toagosei Co., Ltd.) 7 g
Pigment dispersion (cyan pigment dispersion (1) in Table 1) 7 g
Photopolymerization initiator: propylene carbonate solution of triaryl sulfonium salt (trade name: UVI-6992, manufactured by Dow Chemical Co.) 9.0 g

- Sensitizer: 9,10-dibutoxy anthracene, 3.0 g
- Surface active agent: BYK307 (trade name, manufactured by BYK-Chemie) 0.1 g

### [Comparative Example 1-3]

A cyan ink was obtained in the same procedure as in example I-1, except that 6.0 g of an iodonium salt (trade name: IRGACURE 250, manufactured by Ciba Specialty Chemicals, Ltd.) was used instead of 9.0 g of the propylene carbonate solution of triaryl sulfonium salt (trade name: UVI-6992, manufactured by Dow Chemical Co.) as a photopolymerization initiator.

### [Example II-1]

The following components were mixed and stirred, and the mixture was filtered by a membrane filter of 5.0 µm, and thus a magenta ink was obtained.

### <Ink composition components>

Monomer: 3-ethyl-3-(2-ethylhexyloxymethyl) oxethane (trade name: ALONOXETHANE OXT-212, manufactured by Toagosei Co., Ltd.) 35 g
Monomer: 1,2,8,9 diepoxy limonene (trade name: CELLOXIDE 3000, manufactured by Daicel-UCB Co., Ltd.) 30 g
Monomer: bis [1-ethyl (3-oxetanyl)] methyl ether (trade name: ALONOXETHANE OXT-221, manufactured by Toagosei Co., Ltd.) 29 g
Pigment dispersion (cyan pigment dispersion in Table 1) 12 g
Photopolymerization initiator: propylene carbonate solution of triaryl sulfonium salt (trade name: CPI-100P, manufactured by San-Apro Ltd.), 9.0 g

- Sensitizer: 9,10-dibutoxy anthracene, 3.0 g
- Surface active agent: BYK307 (trade name, manufactured by BYK-Chemie) 0.1 g

### [Example II-2]

The following components were mixed and stirred, and the mixture was filtered by a membrane filter of 5.0 µm, and thus a magenta ink was obtained.

### <Ink composition components>

Monomer: 3-ethyl-3-phenoxy oxethane (trade name: ALONOXETHANE OXT-211, manufactured by Toagosei Co., Ltd.) 60 g
Monomer: 1,2,8,9 diepoxy limonene (trade name: CELLOXIDE 3000, manufactured by Daicel-UCB Co., Ltd.) 20 g
Monomer: bis [1-ethyl (3-oxetanyl)] methyl ether (trade name: ALONOXETHANE OXT-221, manufactured by Toagosei Co., Ltd.) 14 g
Pigment dispersion (magenta pigment dispersion in Table 1) 12 g
Photopolymerization initiator: propylene carbonate solution of triaryl sulfonium salt (trade name: CPI-100P, manufactured by San-Apro Ltd.) 9.0 g

- Sensitizer: 9,10-dibutoxy anthracene 3.0 g
- Surface active agent: BYK307 (trade name, manufactured by BYK-Chemie) 0.1 g

### [Comparative Example II-1]

The following components were mixed and stirred, and the mixture was filtered by a membrane filter of 5.0 µm, and thus a magenta ink was obtained.

### <Ink composition components>

Monomer: 1,2,8,9 diepoxy limonene (trade name: CELLOXIDE 3000, manufactured by Daicel-UCB Co., Ltd.) 60 g
Monomer: bis [1-ethyl (3-oxetanyl)] methyl ether (trade name: ALONOXETHANE OXT-221, manufactured by Toagosei Co., Ltd.) 34 g
Pigment dispersion (magenta pigment dispersion in Table 1), 12 g
Photopolymerization initiator: propylene carbonate solution of triaryl sulfonium salt (trade name: CPI-100P, manufactured by San-Apro Ltd.) 9.0 g

- Sensitizer: 9,10-dibutoxy anthracene 3.0 g
- Surface active agent: BYK307 (trade name, manufactured by BYK-Chemie) 0.1 g

### [Comparative Example II-2]

The following components were mixed and stirred, and the mixture was filtered by a membrane filter of 5.0 µm, and thus a magenta ink was obtained.

### <Ink composition components>

Monomer: 3-ethyl-3-phenoxy oxethane (trade name: ALONOXETHANE OXT-211, manufactured by Toagosei Co., Ltd.) 80 g
Monomer: 1,2,8,9 diepoxy limonene (trade name: CELLOXIDE 3000, manufactured by Daicel-UCB Co., Ltd.) 10 g
Monomer: bis [1-ethyl (3-oxetanyl)] methyl ether (trade name: ALONOXETHANE OXT-221, manufactured by Toagosei Co., Ltd.) 6 g
Pigment dispersion (magenta pigment dispersion in Table 1) 12 g
Photopolymerization initiator: propylene carbonate solution of triaryl sulfonium salt (trade name: CPI-100P, manufactured by San-Apro Ltd.) 9.0 g

- Sensitizer: 9,10-dibutoxy anthracene 3.0 g
- Surface active agent: BYK307 (trade name, manufactured by BYK-Chemie) 0.1 g

### [Comparative Example II-3]

A magenta ink was obtained in the same procedure as in example II-1, except that 9.0 g of an iodonium salt (trade name: CI-5102, manufactured by Nippon Soda Co. Ltd.) was used instead of 9.0 g of the triaryl sulfonium salt (trade name: CPI-100P, manufactured by San-Apro Ltd.) as a photopolymerization initiator

### [Example III-1]

The following components were mixed and stirred, and the mixture was filtered by a membrane filter of 5.0 µm, and thus a yellow ink was obtained.

### <Ink composition components>

Monomer: 3-ethyl-3-(2-ethylhexyloxymethyl) oxethane (trade name: ALONOXETHANE OXT-212, manufactured by Toagosei Co., Ltd.) 42 g
Monomer: 3,4-epoxy cyclohexyl methyl-3,4-epoxy cyclohexyl carboxylate (trade name: CYRACURE UVR-6105, manufactured by Dow Chemical Co.) 30 g
Monomer: bis [1-ethyl (3-oxetanyl)] methyl ether (trade name: ALONOXETHANE OXT-221, manufactured by Toagosei Co., Ltd.) 22 g
Pigment dispersion (yellow pigment dispersion in Table 1) 12 g
Photopolymerization initiator: propylene carbonate solution of triaryl sulfonium salt (trade name: UVI-6992, manufactured by Dow Chemical Co.) 9.0 g

- Sensitizer: 9,10-dipropoxy anthracene 3.0 g
- Surface active agent: BYK307 (trade name, manufactured by BYK-Chemie) 0.1 g

### [Example III-2]

The following components were mixed and stirred, and the mixture was filtered by a membrane filter of 5.0 µm, and thus a yellow ink was obtained.

### <Ink composition components>

Monomer: 3-ethyl-3-phenoxy oxethane (trade name: ALONOXETHANE OXT-211, manufactured by Toagosei Co., Ltd.) 78 g
Monomer: 3,4-epoxy cyclohexyl methyl-3,4-epoxy cyclohexyl carboxylate (trade name: CYRACURE UVR-6105, manufactured by Dow Chemical Co.) 10 g
Monomer: bis [1-ethyl (3-oxetanyl)] methyl ether (trade name: ALONOXETHANE OXT-221, manufactured by Toagosei Co., Ltd.) 6 g
Pigment dispersion (yellow pigment dispersion in Table 1) 12 g
Photopolymerization initiator: propylene carbonate solution of triaryl sulfonium salt (trade name: UVI-6992, manufactured by Dow Chemical Co.) 9.0 g

- Sensitizer: 9,10-dipropoxy anthracene 3.0 g
- Surface active agent: BYK307 (trade name, manufactured by BYK-Chemie) 0.1 g

### [Example IV-1]

The following components were mixed and stirred, and the mixture was filtered by a membrane filter of 5.0 µm, and thus a black ink was obtained.

### <Ink composition components>

Monomer: 3-ethyl-3-(2-ethylhexyloxymethyl) oxethane (trade name: ALONOXETHANE OXT-212, manufactured by Toagosei Co., Ltd.) 35 g
Monomer: 3,4-epoxy cyclohexyl methyl-3,4-epoxy cyclohexyl carboxylate (trade name: CYRACURE UVR-6105, manufactured by Dow Chemical Co.) 30 g
Monomer: bis [1-ethyl (3-oxetanyl)] methyl ether (trade name: ALONOXETHANE OXT-221, manufactured by Toagosei Co., Ltd.) 31 g
Pigment dispersion (black pigment dispersion in Table 1) 8 g
Photopolymerization initiator: propylene carbonate solution of triaryl sulfonium salt (trade name: UVI-6992, manufactured by Dow Chemical Co.) 9.0 g

- Sensitizer: 9,10-dibutoxy anthracene 3.0 g
- Surface active agent: BYK307 (trade name, manufactured by BYK-Chemie) 0.1 g

### [Example IV-2]

The following components were mixed and stirred, and the mixture was filtered by a membrane filter of 5.0 µm, and thus a black ink was obtained.

### <Ink composition components>

Monomer: 3-ethyl-3-phenoxy oxethane (trade name: ALONOXETHANE OXT-21 1, manufactured by Toagosei Co., Ltd.) 60 g
Monomer: 3,4-epoxy cyclohexyl methyl-3,4-epoxy cyclohexyl carboxylate (trade name: CYRACURE UVR-6105, manufactured by Dow Chemical Co.) 20 g
Monomer: bis [1-ethyl (3-oxetanyl)] methyl ether (trade name: ALONOXETHANE OXT-221, manufactured by Toagosei Co., Ltd.) 16 g
Pigment dispersion (black pigment dispersion in Table 1) 8 g
Photopolymerization initiator: propylene carbonate solution of triaryl sulfonium salt (trade name: UVI-6992, manufactured by Dow Chemical Co.) 9.0 g

- Sensitizer: 9,10-dibutoxy anthracene, 3.0 g
- Surface active agent: BYK307 (trade name, manufactured by BYK-Chemie) 0.1 g

### <Evaluation>

### 1. Printing and exposure test

Droplets of the inks obtained in examples and comparative examples were ejected by using a piezoelectric head. The head had 318 nozzles at nozzle density of 150 per 25.4 mm, and the nozzles were fixed at deviation of 1/2 of nozzle interval in the direction of column of 2 nozzles, and 300 droplets were applied per 25.4 mm in the nozzle array direction on the media.

The temperature of the head and ink were controlled so that the area close to ejection area is at 50±0.5°C by circulation of warm water within the head.

Ejection of ink from the head was controlled by piezoelectric drive signal applied to the head, and the ink can be ejected by 6 to 42 dpi per 1 droplet, and in the examples the ink was ejected from the head while the medium were conveyed at a position of 1 mm beneath the head. The conveying speed can be set in the range of 50 to 200 mm/s. The piezoelectric driving frequency can be 4.6 kHz at maximum, and by setting these conditions, the droplet ejecting amount can be controlled. In the examples, by setting the conveying speed at 90 mm/s and driving frequency at 1.9 kHz, the ink ejection amount was controlled, thereby ejecting ink droplets at 10 g/m².

The medium on which ink droplets have been deposited is conveyed to the exposure unit, and exposed by using an ultraviolet light emitting diode (UV-LED). As the UV-LED, NCCU033 (trade name) of Nichia Corporation was used in the examples. This LED is capable of emitting ultraviolet ray at wavelength of 365 nm from one chip, and by applying a current of about 500 mA, light of about 100 mW was emitted from the chip. By disposing a plurality of chips at interval of 7 mm, the power of 0.3 W/cm² can be obtained on the surface of the medium. The time until exposure after applying droplets, and the exposure duration can be adjusted by selecting the conveying speed of medium and the distance of head and LED in conveying direction. In the examples, exposure starts after about 0.5 second of ink depositing on the medium.

Depending on the setting of distance to medium and conveying speed, the exposure energy on the medium can be changed from 0.01 to 15 J/cm². In the examples, the exposure energy was adjusted to 200 mJ/cm² by controlling the conveying speed.

The exposure power and exposure energy were measured by a spectroradiometer URS-40D manufactured by Ushio Inc., and the value obtained by integrating wavelength from 220 nm to 400 nm was used.

In the examples, a PET film having a thickness of 100 µm was used as a medium, and printing and exposure tests were conducted in the environment of 23°C and R.H. of 60%. The thickness of cured image was 10 µm.

### 2. Bending Test

The printed surface of the printed and exposed recording medium was folded, observed while the medium was folded, and evaluated in accordance with the following criterion. Results of evaluation are shown in Tables 2 to 5.
A: no cracking.
C: cracked.

### 3. Curing property evaluation

The printed surface of the printed and exposed recording medium was touched, and the degree of tackiness was evaluated in accordance with the following criterion. Results of evaluation are shown in Tables 2 to 5.
A: no tackiness (tack-free).
C: tacky

### 4. Ink stability evaluation

Prepared ink compositions were stored in heated state (60°C, 4 weeks), and evaluated in accordance with the following criterion. Results of evaluation are shown in Tables 2 to 5.
A: thickening by heated storage increased by less than 10%.
B: thickening by heated storage increased by 10% or more to less than 50%.
C: thickening by heated storage increased by 50% or more or caused gelation.

**Table 2**

| | Monofunctional oxethane | Photopolymerization initiator | Bending test | Curing property | Ink stability |
|---|---|---|---|---|---|
| Example I-1 | 40% | Triaryl sulfonium salt | A | A | A |
| Example I-2 | 70% | Triaryl sulfonium salt | A | A | A |
| Example I-3 | 40% | Triaryl sulfonium salt | A | A | A |
| Example I-4 | 70% | Triaryl sulfonium salt | A | A | A |
| Comparative example I-1 | 20% | Triaryl sulfonium salt | C | A | A |
| Comparative example I-2 | 80% | Triaryl sulfonium salt | A | C | A |
| Comparative example I-3 | 40% | Iodonium salt | A | A | C |

**Table 3**

| | Monofunctional oxethane | Photopolymerization initiator | Bending test | Curing property | Ink stability |
|---|---|---|---|---|---|
| Example II-1 | 30% | Triaryl sulfonium salt | A | A | A |
| Example II-2 | 60% | Triaryl sulfonium salt | A | A | A |
| Comparative example II-1 | 0% | Triaryl sulfonium salt | C | A | A |
| Comparative example II-2 | 80% | Triaryl sulfonium salt | A | C | A |
| Comparative example II-3 | 35% | Iodonium salt | A | A | C |

**Table 4**

| | Monofunctional oxethane | Photopolymerization initiator | Bending test | Curing property | Ink stability |
|---|---|---|---|---|---|
| Example III-1 | 42% | Triaryl sulfonium salt | A | A | A |
| Example III-2 | 65% | Triaryl sulfonium salt | A | A | A |

**Table 5**

| | Monofunctional oxethane | Photopolymerization initiator | Bending test | Curing property | Ink stability |
|---|---|---|---|---|---|
| Example IV-1 | 35% | Triaryl sulfonium salt | A | A | A |
| Example IV-2 | 60% | Triaryl sulfonium salt | A | A | A |

As seen from Tables 2 to 5, the ink compositions of the Examples are excellent in curing property and ink storage stability, and are free from cracking of a printed image (bending test). By contrast, the Comparative Examples, lacking any of the requisite features of the invention, failed to satisfy all the conditions of no cracking at the bending test, excellent curing property and excellent ink stability at the same time.

## Claims

1. An ink composition comprising:
a triaryl sulfonium salt compound as a polymerization initiator;
a pigment dispersion containing a pigment, a dispersant and a cation-polymerizable compound and/or a solvent;
a sensitizer;
as a cation-polymerizable compound, at least one compound containing a monofunctional oxetane group represented by the following formula (1) in an amount of from 30 to 75 mass % relative to the total amount of the cation-polymerizable compounds contained in the ink composition 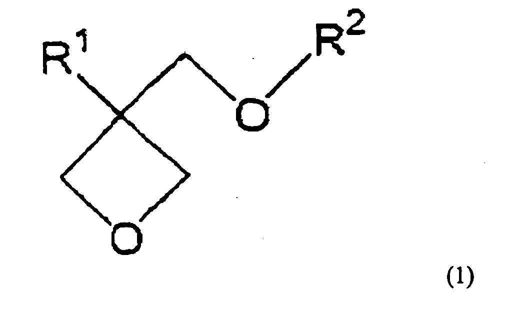
wherein R¹ represents a hydrogen atom or an alkyl group having 1 to 6 carbon atoms, and R² represents an alkyl group having 1 to 12 carbon atoms or an aryl group having 6 to 12 carbon atoms;
as a cation-polymerizable compound, a compound containing two oxetane groups in an amount of from 10 to 45 mass % relative to the total amount of the cation-polymerizable compounds contained in the ink composition; and
as a cation-polymerizable compound, a compound containing two oxirane groups in an amount of from 10 to 40 mass % relative to the total amount of the cation-polymerizable compounds contained in the ink composition.

2. The ink composition of claim 1, wherein the dispersant in the pigment dispersion is a polymer having a repeating unit represented by the following formula (2): 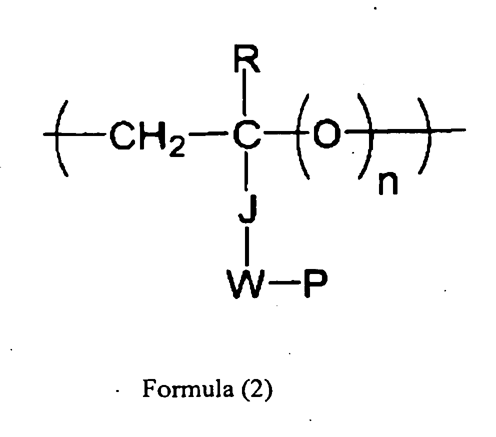 wherein in formula (2), R represents a hydrogen atom or a methyl group; J represents -CO-, -COO-, -CONR³-, -OCO-, a methylene group, or a phenylene group; R³ represents a hydrogen atom, an alkyl group or an aryl group; n represents 0 or 1; W represents a single bond or a divalent linking group; and P represents a heterocyclic residue forming a colorant.

3. The ink composition of any one of claims 1 to 2, wherein the sensitizer is a 9,10-substituted anthracene compound.

4. An ink composition for inkjet recording, comprising the ink composition of any one of claims 1 to 3.

5. An image forming method comprising recording an image by inkjet recording by ejecting the ink composition of any one of claims 1 to 4.

6. An image forming method comprising:
recording an image on a recording material by using the ink composition of any one of claims 1 to 4, and
curing the image recorded on the recording material by irradiation of the image with an active energy ray.

7. The image forming method of claim 6, wherein a light emitting diode is used as a light source for the irradiation with the active energy ray.

8. The image forming method of claim 6 or 7, wherein the central wavelength of the active energy ray is 365 ± 20 nm.

9. The image forming method of any one of claims 6 to 8, wherein the thickness of the cured image is from 2 to 30 µm.

10. A recorded material formed from the ink composition of any one of claims 1 to 4.

## Patentansprüche

1. Tintenzusammensetzung, umfassend:
eine Triarylsulfoniumsalzverbindung als einen Polymerisationsinitiator;
eine Pigmentdispersion, umfassend ein Pigment, ein Dispergiermittel und eine kationisch polymerisierbare Verbindung und/oder ein Lösungsmittel;
einen Sensibilisator;
als kationisch polymerisierbare Verbindung zumindest eine Verbindung, umfassend eine monofunktionelle Oxetangruppe, dargestellt durch die folgende Formel (1), in einer Menge von 30 bis 75 Massen-%, bezogen auf die Gesamtmenge der kationisch polymerisierbaren Verbindungen, die in der Tintenzusammensetzung enthalten sind 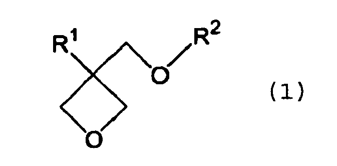
worin R¹ ein Wasserstoffatom oder eine Alkylgruppe mit 1 bis 6 Kohlenstoffatomen ist und R² eine Alkylgruppe mit 1 bis 12 Kohlenstoffatomen oder Arylgruppe mit 6 bis 12 Kohlenstoffatomen ist;
als kationisch polymerisierbare Verbindung eine Verbindung mit zwei Oxetangruppen in einer Menge von 10 bis 45 Massen-%, bezogen auf die Gesamtmenge der kationisch polymerisierbaren Verbindungen, die in der Tintenzusammensetzung enthalten sind; und
als kationisch polymerisierbare Verbindung eine Verbindung mit zwei Oxirangruppen in einer Menge von 10 bis 40 Massen-%, bezogen auf die Gesamtmenge der kationisch polymerisierbaren Verbindungen, die in der Tintenzusammensetzung enthalten sind.

2. Tintenzusammensetzung nach Anspruch 1, worin das Dispergiermittel in der Pigmentdispersion ein Polymer mit einer Wiederholungseinheit mit der folgenden Formel (2) ist: 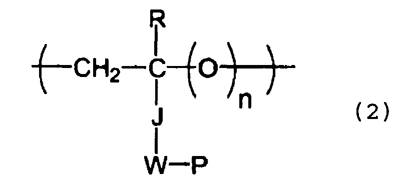 worin in der Formel (2) R ein Wasserstoffatom oder eine Methylgruppe ist, J -CO-, -COO-, -CONR³-, -OCO-, eine Methylen- oder Phenylengruppe ist, R³ Wasserstoffatom, eine Alkylgruppe oder Arylgruppe ist, n 0 oder 1 ist, W eine Einfachbindung oder bivalente Bindegruppe ist; und P ein heterocyclischer Rest ist, der ein Färbemittel bildet.

3. Tintenzusammensetzung nach einem der Ansprüche 1 bis 2, worin der Sensibilisator eine 9,10-substituierte Anthrazenverbindung ist.

4. Tintenzusammensetzung für die Tintenstrahlaufzeichnung, umfassend die Tintenzusammensetzung nach einem der Ansprüche 1 bis 3.

5. Bildgebungsverfahren, umfassend das Aufzeichnen eines Bildes durch Tintenstrahlaufzeichnung durch Ejizieren der Tintenzusammensetzung nach einem der Ansprüche 1 bis 4.

6. Bildgebungsverfahren, umfassend:
Aufzeichnen eines Bildes auf einem Aufzeichnungsmaterial durch Verwendung der Tintenzusammensetzung nach einem der Ansprüche 1 bis 4 und
Härten des auf dem Aufzeichnungsmaterial aufgezeichneten Bildes durch Bestrahlen des Bildes mit aktiver Energiestrahlung.

7. Bildgebungsverfahren nach Anspruch 6, worin eine Lichtemissionsdiode als Lichtquelle für die Bestrahlung mit der aktiven Energiestrahlung verwendet wird.

8. Bildgebungsverfahren nach Anspruch 6 oder 7, worin die zentrale Wellenlänge der aktiven Energiestrahlung 365 ± 20 nm ist.

9. Bildgebungsverfahren nach einem der Ansprüche 6 bis 8, worin die Dicke des gehärteten Bildes von 2 bis 30 µm ist.

10. Aufgezeichnetes Material, gebildet aus der Tintenzusammensetzung nach einem der Ansprüche 1 bis 4.

## Revendications

1. Composition d'encre, comprenant :
un composé de sel de triaryl sulfonium en tant qu'initiateur de polymérisation,
une dispersion de pigment contenant un pigment, un dispersant et un composé polymérisable par voie cationique et/ou un solvant,
un sensibilisateur,
comme composé polymérisable par voie cationique, au moins un composé contenant un groupement oxétane monofonctionnel représenté par la formule (1) suivante, en quantité de 30 à 75% en masse par rapport à la quantité totale des composés polymérisables par voie cationique contenus dans la composition d'encre 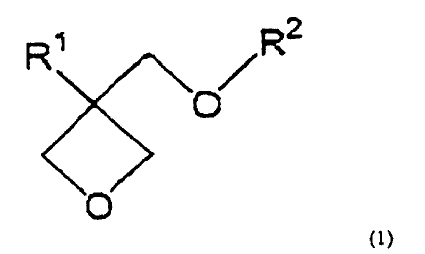
dans laquelle R¹ représente un atome d'hydrogène ou un groupement alkyle comptant 1 à 6 atomes de carbone, et R² représente un groupement alkyle comptant 1 à 12 atomes de carbone ou un groupement aryle comptant 6 à 12 atomes de carbone,
comme composé polymérisable par voie cationique, un composé contenant deux groupements oxétane en quantité de 10 à 45 % en masse par rapport à la quantité totale des composés polymérisables par voie cationique contenus dans la composition d'encre, et
comme composé polymérisable par voie cationique, un composé contenant deux groupements oxirane en quantité de 10 à 40% en masse par rapport à la quantité totale des composés polymérisables par voie cationique contenus dans la composition d'encre.

2. Composition d'encre selon la revendication 1, dans laquelle le dispersant dans la dispersion de pigment est un polymère possédant un motif répété représenté par la formule (2) qui suit : 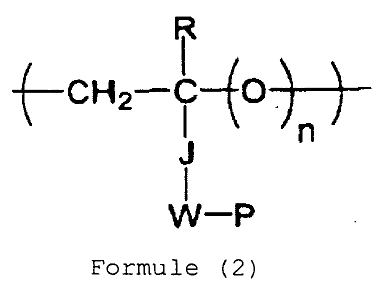 dans laquelle, dans la formule (2), R représente un atome d'hydrogène ou un groupement méthyle ; J représente -CO-, -COO-, -CONR³-, -OCO-, un groupement méthylène, ou un groupement phénylène ; R³ représente un atome d'hydrogène, un groupement alkyle ou un groupement aryle ; n représente 0 ou 1 ; W représente une liaison simple ou un groupement de liaison bivalent ; et P représente un résidu hétérocyclique formant un colorant.

3. Composition d'encre selon l'une des revendications 1 à 2, dans laquelle le sensibilisateur est un composé d'anthracène substitué en 9,10.

4. Composition d'encre pour impression à jet d'encre, comprenant la composition d'encre selon l'une des revendications 1 à 3.

5. Procédé de formation d'une image comprenant l'impression d'une image par impression à jet d'encre, par éjection de la composition d'encre selon l'une des revendications 1 à 4.

6. Procédé de formation d'une image comprenant :
impression d'une image sur un matériau d'impression en utilisant la composition d'encre selon l'une des revendications 1 à 4, et
fixation de l'image imprimée sur le matériau d'impression par irradiation de l'image par un rayonnement énergétique actif.

7. Procédé de formation d'une image selon la revendication 6, dans lequel une diode électroluminescente est utilisée comme source de lumière pour l'irradiation par le rayonnement énergétique actif.

8. Procédé de formation d'une image selon la revendication 6 ou 7, dans lequel la longueur d'onde centrale du rayonnement énergétique actif est de 365±20 nm.

9. Procédé de formation d'une image selon l'une des revendications 6 à 8, dans lequel l'épaisseur de l'image fixée est de 2 à 30 µm.

10. Matériau imprimé formé à partir de la composition d'encre de l'une des revendication 1 à 4.
